# EUROPÄISCHE PATENTSCHRIFT

(11) **EP 3 799 995 B1**
(45) Veröffentlichungstag und Bekanntmachung des Hinweises auf die Patenterteilung: **02.12.2026**
(21) Anmeldenummer: 19000447.3
(22) Anmeldetag: 03.10.2019
(51) Int. Cl.: B23K 9/12, B23K 9/26

(54) **LICHTBOGENSCHWEISSBRENNER**
ARC WELDING TORCH
CHALUMEAU DE SOUDAGE À L'ARC

(43) Veröffentlichungstag der Anmeldung: 07.04.2021
(73) Patentinhaber: SKS Welding Systems GmbH, 67661 Kaiserslautern (DE)
(72) Erfinder: Klein, Thomas, 67688 Rodenbach (DE)
(74) Vertreter: Mooser, Sebastian Thomas

(56) Entgegenhaltungen:
- WO-A1-2005/049259
- DE-B1- 1 540 862
- US-A1- 2013 240 496
- US-A1- 2014 110 386
- US-A1- 2017 165 780
- US-B2- 8 373 094

## Beschreibung

Die Erfindung betrifft eine Lichtbogenschweißbrennereinrichtung mit einer abschmelzenden Elektrode, wobei die Elektrode mit einer Bewegungsrichtung von einem hinteren Ende der Lichtbogenschweißbrennereinrichtung zum Vorschub in Richtung eines vorderen Endes der Lichtbogenschweißbrennereinrichtung vorgesehen ist, in dessen Bereich die Elektrode während eines Lichtbogenschweißprozesses abschmilzt, die Elektrode in der Lichtbogenschweißbrennereinrichtung in einer austauschbaren Drahtseele geführt ist, wobei die Drahtseele wiederum zumindest im Bereich des hinteren Endes der Lichtbogenschweißbrennereinrichtung in einem die Drahtseele umgebenden und als austauschbares Verschleißteil ausgebildetes Führungselement angeordnet ist, und wobei das Führungselement der Drahtseele zum gemeinsamen verschleißbedingten Austausch mit der Drahtseele vorgesehen ist. Eine solche Lichtbogenschweißbrennereinrichtung kann vorzugsweise zudem mit einer Medienzuführung für ein Schutz- oder Aktivgas sowie für elektrischen Strom versehen sein.

Es existiert eine Vielzahl von unterschiedlichen Schweißverfahren. Die vorliegende Erfindung hat besondere Bedeutung für das Lichtbogenschweißen. Dieses basiert auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am prozeßseitigen Ende des Schweißbrenners zum Zielmetallstück transportiert.

Bei Anlegen einer elektrischen Spannung am Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstanden Tropfen des Schweißdrahtes oder durch Übergabe des Tropfens im Kurzschluss auf die verflüssigte Stelle der Zielmetallstücke, werden diese miteinander verbunden. Aufgrund des geringen Abstandes von der Kontaktdüse und der Gasdüse zum Lichtbogen bzw. zum aufgeheizten Zielmetallstück werden diese Bauteile stark erwärmt. Durch die hohe thermische Belastung ist vor allem die Kontaktdüse starkem Verschleiß ausgesetzt.

Herkömmliche Brennersysteme bestehen in ihrem vorderen, schweißprozeßseitigem, Endabschnitt in der Regel im Wesentlichen aus der Kontaktdüse, dem Düsenstock und der äußeren Gasdüse. Diese Bauteile sind am Brennerhals (Außenrohr, Innenrohr) in der Regel lösbar montiert und thermisch bzw. elektrisch über Kontaktflächen, Gewinde miteinander oder mit anderen Bauteilen des Brennerhalses gekoppelt oder auch isoliert. Das Außenrohr muss jedoch von stromführenden anderen Bauteilen elektrisch entkoppelt sein, da dort aus Sicherheitsgründen keine Spannung anliegen darf. Durch die thermische Kopplung der Bauteile wird versucht, die Energie, welche in Form von Wärme in die Kontaktdüse bzw. Gasdüse eingeleitet wird, über das Außenrohr bzw. Innenrohr möglichst wirksam abzuleiten und dadurch die Maximaltemperatur der Kontaktdüse zu senken, um den Verschleiß zu minimieren.

Üblicherweise wird bei gattungsgemäßen Lichtbogenschweißbrennereinrichtungen im Bereich von deren hinterem Ende der als abschmelzende Elektrode fungierende Schweißdraht der Lichtbogenschweißbrennereinrichtung sowie das Schutzgas zugeführt, sofern das jeweilige Schweißverfahren ein solches Gas vorsieht. Der Schweißdraht wird durch das Innere der Lichtbogenschweißbrennereinrichtung von deren hinterem Ende bis zum Austritt aus dem vorderen, prozeßseitigem Ende entsprechend des Verbrauchs vorgeschoben. Hierzu sind im Bereich des hinteren Endes an sich vorbekannte Drahtvorschubmittel angeordnet, die beispielsweise mittels eines angetriebenen Räderpaares den Schweißdraht vorschieben und durch das Innere der Lichtbogenschweißbrennereinrichtung bewegen. Um die Lichtbogenschweißbrennereinrichtung selbst vor Verschleiß aufgrund der Vorschubbewegung des Schweißdrahts zu schützen, wird der Schweißdraht üblicherweise in einer sogenannten Drahtseele angeordnet. Der Verschleiß im Inneren der Lichtbogenschweißbrennereinrichtung aufgrund der Vorschubbewegung des Schweißdrahts findet somit vor allem in der Drahtseele und nicht an Bauteilen des Gehäuses der Lichtbogenschweißbrennerrichtung statt. Letztere verschleißt somit anstelle anderer Bauteile im Inneren der Lichtbogenschweißbrennereinrichtung. Als Folge davon ist es erforderlich, dass die Drahtseele von Zeit zu Zeit ausgetauscht wird.

Herkömmlicherweise ist es für den verschleißbedingten Austausch der Drahtseele erforderlich, daß der Schweißbrenner demontiert wird, insbesondere auch und vor allem das dem schweißprozessseitigen Ende abgewandte hintere andere Ende des Lichtbogenschweißbrenners, das sich gegenüber den Drahtvorschubmitteln befindet. Dies ist mit großem zeitlichen Aufwand für die Demontage und Montage der Lichtbogenschweißbrennereinrichtung verbunden. Aus der EP 1 658 155 B1 ist deshalb bereits eine Lösung bekannt geworden, bei welcher der Austausch der Drahtseele vom schweißprozeßseitigen Ende der Lichtbogenschweißbrennereinrichtung aus erfolgt. Zur Demontage und Entnahme der Drahtseele muß lediglich das vordere Ende der Lichtbogenschweißbrennereinrichtung demontiert, eine Verbindung eines Führungsmittels für die Drahtseele mit weiteren Bauteilen der Lichtbogenschweißbrennereinrichtung gelöst und das Führungsmittel zusammen mit der Drahtseele entnommen werden. Anschließend wird eine neue Drahtseele zusammen mit dem Führungsmittel wieder von vorne in den Schweißbrenner eingeführt, bis zum hinteren Ende des Schweißbrenners durchgeschoben und das Führungsmittel wieder innerhalb der Lichtbogenschweißbrennereinrichtung lösbar befestigt.

An dieser Lösung kann als nachteilig empfunden werden, dass insbesondere die Montage der Drahtseele im Bereich des hinteren Endes der Lichtbogenschweißbrennereinrichtung blind erfolgen muß und somit nicht überprüft werden kann, ob die neu eingeführten Bauteile korrekt angeordnet und montiert sind. Eine fehlerhafte Montage zeigt sich erst nach Wiederinbetriebnahme der Lichtbogenschweißbrennereinrichtung, wenn aufgrund der fehlerbehafteten Montage der Lichtbogenschweißbrennereinrichtung nicht wie vorgesehen arbeitet und/oder mit ihr teurer Ausschuß produziert wird. Es muß dann eine zeit- und kostenaufwändige erneute Demontage und Montage der Lichtbogenschweißbrennereinrichtung und eine vorübergehende Außerbetriebnahme einer mit hohen Investitionskosten verbundenen Schweißanlage erfolgen.

Schließlich ist aus der US 2017/165780 eine Lichtbogenschweißbrennereinrichtung bekannt, die zum Handschweißen vorgesehen ist. In der Schrift wird eine sogenannte torch liner assembly der Lichtbogenschweißbrennereinrichtung beschrieben, bei der eine Drahtseele am hinteren Ende der Schweißbrennereinrichtung in diese eingeführt ist. Dazu ist eine rohrförmige Schweißbrennerauskleidung durch eine Ausnehmung einer Endkappe hindurchgeführt. Die rohrförmige Schweißbrennerauskleidung schließt bündig mit der Endkappe ab und der Schweißdraht ist bereits bei seinem Eintritt in die Lichtbogenschweißbrennereinrichtung in der Drahtseele geführt.

Der Erfindung liegt deshalb die Aufgabe zugrunde, eine Möglichkeit zu schaffen, bei einer Lichtbogenschweißbrennereinrichtung der eingangs genannten Art, eine korrekte Montage einer ausgetauschten Drahtseele besser kontrollieren und beurteilen zu können.

Diese Aufgabe wird bei einer Lichtbogenschweißbrennereinrichtung der eingangs genannten Art erfindungsgemäß dadurch gelöst, daß für das Führungselement hinsichtlich seiner Einführrichtung in den Lichtbogenschweißbrenner eine vorbestimmte Endposition im Lichtbogenschweißbrenner vorgesehen ist, bei deren Erreichen durch das Führungselement ein Positionssignalisationsmittel die positionsgerechte Anordnung des Führungselements signalisiert. In einer bevorzugten Ausführungsform der Erfindung signalisiert das Positionssignalisationsmittel die positionsgerechte Anordnung durch ein außerhalb bzw von außen der Lichtbogenschweißbrennereinrichtung wahrnehmbares Signal. Besonders bevorzugt ist hierbei, wenn das Positionssignalisationsmittel als ein außerhalb der Lichtbogenschweißbrennereinrichtung angeordnetes Positionsanzeigemittel ausgebildet ist, das bei Erreichen der Sollposition des Führungselements von außen als optisches Signal wahrnehmbar ist. Grundsätzlich sind aber auch andere Ausführungsformen des Positionssignalisationsmittel als ein optisch wahrnehmbares Positionsanzeigemittel denkbar. So könnte beispielsweise durch eine positionsgerechte Anordnung des Führungselements, das die Drahtseele aufnimmt und gemeinsam mit dieser in die Lichtbogenschweisseinrichtung eingeführt wird, ein elektrisches Signal ausgelöst oder unterbrochen werden, was dann für einen Bediener mit geeigneten Mitteln wahrnehmbar gemacht wird. Ebenso könnte bei Erreichen der vorgesehenen Sollposition des Führungsmittel oder der Drahtseele ein akustisches Signal oder ein auf einem Anzeigemittel optisch wahrnehmbares Signal generiert werden.

In einer weiteren besonders bevorzugten Ausführungsform der Erfindung kann vorgesehen sein, dass das Führungselement mit einem seiner Enden durch ein äußeres, endseitiges Gehäuseteil der Lichtbogenschweißbrennereinrichtung, insbesondere zusammen mit dem Schweißdraht, hindurchgeführt ist und hierbei in der Gebrauchslage des Führungselements in der Lichtbogenschweißbrennereinrichtung aus dem äußeren Gehäuseteil der Lichtbogenschweißbrennereinrichtung nach außen hinausragt. Das äußere Gehäuseteil kann insbesondere eine Endkappe der Lichtbogenschweißbrennereinrichtung sein, die mit einem sich über die Längsachse der Lichtbogenschweißbrennereinrichtung erstreckenden Mantelrohr verbunden ist.

Um mit einem Führungselement sowohl die Funktion einer sicheren Anordnung der Drahtseele im Inneren der Lichtbogenschweißbrennereinrichtung im Bereich von dessen hinteren, drahtvorschubseitigem, Endes als auch die Funktion eines Positionsanzeigemittels erfüllen zu können, kann es besonders vorteilhaft sein, daß das Führungselement als Hülse mit - in Bezug auf seine Längserstreckung entlang seiner Längsachse - unterschiedlich großen Durchmessern seiner Außenfläche ausgebildet ist. Hierdurch ist es möglich, dass zumindest ein Abschnitt des Führungsmittels zur positionsgenauen Anordnung gemäß einer vorbestimmten Sollposition entlang der Längsachse der Lichtbogenschweißbrennereinrichtung und einen anderen Abschnitt des Führungsmittels als aus dem Gehäuse der Lichtbogenschweißbrennereinrichtung hinausragendes Positionsanzeigemittel zu benutzen. Der zumindest eine Abschnitt des Führungsmittels mit dem größeren Durchmesser kann hierbei bei Erreichen in der Sollposition gegen einen - in Einschubrichtung - Anschlag im Inneren der Lichtbogenschweißbrennereinrichtung anliegen. Eine solche vorbestimmte Position des Führungsmittels kann dann durch den zumindest einen Abschnitt des Führungsmittels mit einem kleineren Durchmesser außerhalb des Gehäuses der Lichtbogenschweißbrennereinrichtung optisch wahrnehmbar signalisiert werden. Dieser Abschnitt kann somit die Funktion des Positionsanzeigemittels übernehmen. Besonders bevorzugt kann in diesem Zusammenhang sein, dass sich, in Einschubrichtung der Drahtseele in der Lichtbogenschweißbrennereinrichtung gesehen, der Abschnitt mit dem kleineren Außendurchmesser, insbesondere mit dem kleinsten Außendurchmesser, vor dem zumindest einen Abschnitt mit einem oder mehreren größeren Außendurchmessern des Führungsmittels befindet.

In einer weiteren bevorzugten Ausführungsform der Erfindung kann ein hülsenförmiger Einlaufkörper vorgesehen sein, der mit dem Gehäuse des Lichtbogenschweißkörpers verbunden, insbesondere lösbar verbunden, ist. Das Gehäuse kann insbesondere ein auch die Gehäuseaußenfläche der Lichtbogenschweißbrennereinrichtung aufweisendes Mantelrohrs und/oder eine stirnseitig an das Mantelrohr angefügte Endkappe sein. Der hülsenförmige Einlaufkörper kann mit einer sich in Richtung der Längsachse erstreckenden zylindrischen Ausnehmung versehen sein. Die zylindrische Ausnehmung kann vorzugsweise einen konstanten Durchmesser aufweisen, die als Aufnahme für den Führungskörper dient, in welcher der Führungskörper vorzugsweise verbindungslos angeordnet ist. Im Bereich seiner Außenfläche kann der hülsenförmige Einlaufkörper mit dem Gehäuse der Lichtbogenschweißbrennereinrichtung verbunden sein, insbesondere lösbar verbunden sein, wie beispielsweise mittels einer Gewindeverbindung. Vorzugsweise kann der Einlaufkörper mit einem endseitigen Bauteil des Gehäuses, beispielsweise einer end- bzw stirnseitigen Endkappe, verbunden sein. Im Bereich vor dem stirnseitigen Ende des Einlaufkörpers kann eine Durchgangsausnehmung des endseitigen Bauteils des Gehäuses mit einem Absatz versehen sein, so dass für den Einlaufkörper in Richtung des Einschubs der austauschbaren Bauteile, Drahtseele und Führungskörper, ein Positionsanschlag ausgebildet ist. Im weiteren Verlauf kann sich die Durchgangsausnehmung des endseitigen Bauteils vorzugsweise konisch verjüngen, wobei der konische Abschnitt mit Vorteil als Einschubbegrenzung des Führungselements vorgesehen sein kann.

Es kann ferner von Vorteil sein, wenn sowohl das Führungselement gegen die Endkappe als auch das Führungselement gegen den hülsenförmiges Einlaufkörper mit einem Dichtmittel abgedichtet ist, um Leckagen des im Inneren der Lichtbogenschweißbrennereinrichtung zur Schweißprozeßstelle zugeführten Schutzgases zu vermeiden. Hierbei kann eines der Dichtmittel vorzugsweise auf der äußeren Mantelfläche zwischen zwei Abschnitten des Führungskörpers mit unterschiedlichen Durchmessern angeordnet sein. Hierbei kann der Abschnitt mit dem kleineren Durchmesser, der Abschnitt des Führungselements sein, dessen Ende bei positionskorrekter Anordnung aus der Endkappe herausragt. Der andere Abschnitt mit dem größeren Durchmesser kann vorzugsweise jener Abschnitt des Führungselements sein, mit welchem das Führungselement vorzugsweise verbindungslos aber trotzdem möglichst spielfrei im Einlaufkörper angeordnet ist. Dieses erste Dichtelement ist besonders vorzugsweise auf einem konischen Abschnitt zwischen den beiden Abschnitten mit einem größeren und einem kleineren Durchmesser angeordnet und liegt zudem gegen die Durchgangsbohrung der Endkappe an, vorzugsweise im Bereich eines konischen Abschnitts der Durchgangsbohrung. Das Dichtungselement erzeugt hierdurch keine relevanten Haltekräfte zwischen dem Führungselement und dem Einlaufkörper wodurch sich das Führungselement zusammen mit der Drahtseele besonders einfach und ohne das Lösen von Halte- oder Verbindungskräfte aus der Lichtbogenschweißbrennereinrichtung lösen läßt.

Das zweite Dichtungselement ist vorzugsweise auf einem Abschnitt der äußeren Mantelfläche des Führungselements mit einem größeren Durchmesser angeordnet. Vorzugsweise ist dieser Abschnitt mit einem größeren Durchmesser als Abschnitt mit einem konstanten Durchmesser ausgebildet und befindet sich innerhalb der zylindrischen Ausnehmung des Einlaufkörpers.

In einer weiteren bevorzugten Ausführungsform der Erfindung kann vorgesehen sein, daß das Führungselement kraft- oder formschlüssig im Einlaufkörper gehalten ist. Hierdurch kann eine zusätzliche Sicherheit erreicht werden, dass das Führungselement nicht nur beim Einschub in die Lichtbogenschweißbrennereinrichtung sondern auch während dessen Betrieb positionskorrekt angeordnet bleibt.

In einer hierzu alternativen Ausführungsform der Erfindung kann auch eine Lösung vorteilhaft sein, bei welcher das eines der Enden der Drahtseele aufnehmende Führungselement in seiner Endposition - auch während des Einsatzes der Lichtbogenschweißbrennereinrichtung - ohne eine Haltekraft innerhalb der Lichtbogenschweißbrennereinrichtung angeordnet ist. Da das Positionssignalisationsmittel vorzugsweise nicht nur während des Einführvorgangs sondern auch während des Betriebs ständig, aber zumindest bei Bedarf, bei positionsgerechter Anordnung dies signalisiert, kann auch ohne eine Haltekraft ausgekommen werden. Wird aufgrund des Positionssignalisationsmittels eine Abweichung des Führungselements von seiner vorgesehenen Position festgestellt, kann dann entsprechend eingegriffen werden. Diese Lösung hat auch den Vorteil, daß aufgrund der fehlenden Haltekraft, die die Drahtseele und das Führungselement umfassende Baugruppe zumindest im wesentlichen ohne Überwindung einer Haltekraft besonders einfach insgesamt aus der Lichtbogenschweißeinrichtung von vorne, im Bereich der Prozeßstelle, aus der Lichtbogenschweißbrennereinrichtung herausgezogen werden kann, ohne die Lichtbogenschweißbrennereinrichtung selbst insbesondere an ihrem hinteren Ende demontieren zu müssen.

Die Aufgabe wird zudem durch eine Baugruppe zum Austausch der Drahtseele gemäß Anspruch 13 gelöst.

Der die austauschbare Baugruppe betreffende Aspekt der Erfindung liegt der Gedanke zugrunde, eine positionskorrekte Anordnung der von vorne, vom schweißprozeßseitigen Ende der Lichtbogenschweißbrennereinrichtung, eingeführten austauschbaren Baugruppe, dadurch sicherstellen zu können, daß das Erreichen oder das Nicht-Erreichen der vorgesehenen Position der blind und gemeinschaftlich eingeschobenen Drahtseele und Führungskörper von außen kontrolliert, insbesondere optisch kontrolliert, werden kann. Da die Anordnung im nicht einsehbaren Inneren der Lichtbogenschweißbrennereinrichtung vorgenommen werden muß, stellt ein von außen wahrnehmbares Positionssignalisationsmittel, insbesondere ein optisch wahrnehmbares Positionsanzeigemittel, eine enorme Hilfe dar, um Fehlpositionierungen der Drahtseele sowie des zumindest einen Führungselements der von vorne eingeschobenen austauschbaren Baugruppe zu vermeiden. Es ist hierbei bevorzugt, daß das Positionssignalisationsmittel, insbesondere Positionsanzeigemittel, der austauschbaren Baugruppe nur dann und auch erst dann eine korrekte Ist-Anordnung in der Soll-Position im Inneren des Gehäuses signalisiert, wenn das auf der Drahtseele und zur gemeinsamen austauschbaren Baugruppe gehörende Führungsmittel seine Endposition tatsächlich erreicht hat.

Eine technisch besonders einfach realisierbare konkrete Lösung kann dabei vorsehen, dass das Positionssignalisationsmittel, insbesondere Positionsanzeigemittel, Bestandteil des Führungselements oder eines anderen Bauteils der austauschbaren Bauteilgruppe ist, welche verschleißbedingt und im Austausch für eine Bauteilgruppe einer verschlissenen Drahtseele in die jeweilige Lichtbogenschweißbrennereinrichtung eingebaut wird. Dieses Positionssignalisationsmittel, insbesondere Positionsanzeigemittel, sollte somit zusammen mit der Baugruppe am prozeßseitigen Ende in die Lichtbogenschweißbrennereinrichtung eingeführt und vollständig durch die Lichtbogenschweißbrennereinrichtung bis zu deren hinteren Ende durch die Lichtbogenschweißbrennereinrichtung hindurchgeführt werden. Bei Erreichen der vorgesehenen Endposition des Führungselements in der Lichtbogenschweißbrennereinrichtung sollte das Positionssignalisationsmittel, insbesondere Positionsanzeigemittel, der austauschbaren Baugruppe aus dem Gehäuse der Lichtbogenschweißbrennereinrichtung im Bereich deren prozeßseitigen Ende abgewandten hinteren Ende wieder austreten und somit von außen optisch wahrnehmbar werden.

Gemäß eines weiteren Aspekts der Erfindung soll die Gefahr eines Knicks des Schweißdrahts aufgrund seiner Vorschubbewegung sowie aufgrund des Einlaufs in eine enge stirnseitig vorgesehene Ausnehmung der Lichtbogenschweißbrennereinrichtung verringert werden. Diese Aufgabe kann bei einer Lichtbogenschweißbrennereinrichtung der eingangs genannten Art erfindungsgemäß durch ein aus der Lichtbogenschweißbrennereinrichtung herausragendes und zwischen einer äußeren Endkappe der Lichtbogenschweißbrennereinrichtung und Drahtvorschubmittel angeordnetes Knickschutzmittel für den Schweißdraht, in welchem der Schweißdraht geführt ist, gelöst sein, wie dies insbesondere in Anspruch 17 beschrieben ist.

Eine bevorzugte Weiterbildung einer Ausführungsform von diesem Aspekt der Erfindung kann vorsehen, daß das Knickschutzmittel in der Lichtbogenschweißbrennereinrichtung lösbar angeordnet ist und ein Abschnitt des Knickschutzmittels aus einer Ausnehmung der Endkappe der Lichtbogenschweißbrennereinrichtung hinausragt. Dies ermöglicht es besonders einfach das Knickschutzmittel als austauschbares Verschleißteil vorzusehen. Da das Knickschutzmittel im Inneren des Gehäuses der Lichtbogenschweißbrennereinrichtung angeordnet ist, kann es vorzugsweise als Bestandteil der Baugruppe ausgebildet sein, welche bei Verschleiß der Drahtseele insgesamt gegen eine neue derartige Baugruppe ausgetauscht wird. Im Zusammenhang mit einem im Bereich des drahtvorschubseitigen Ende der Lichtbogenschweißbrennereinrichtung vorgesehenen Knickschutzmittel für den Schweißdraht kann es ferner von Vorteil sein, daß das Knickschutzmittel hülsenförmig, sowie mit einer durchgehenden Ausnehmung zur Aufnahme des Schweißdrahts ausgebildet ist, und vorzugsweise im drahtvorschubseitigen Ende eine Begrenzungswand der durchgehenden Ausnehmung mit einer Fase versehen ist. Die Ausnehmung verläuft hierbei vorzugweise konzentrisch zum vorgesehenen Verlauf der Längsachse des Schweißdrahts. Es kann ferner günstig sein, dass ein Durchmesser der Ausnehmung auf den Durchmesser des Schweißdrahts derart abgestimmt ist, dass der Schweißdraht in der Ausnehmung sicher geführt ist und trotzdem möglichst wenig Widerstand bei der Bewegung durch die Ausnehmung erfährt. Die Fase kann hierbei einen sicheren und knickfreien Einlauf des Schweißdrahts in das Knickschutzmittel unterstützen.

Die vorliegende Erfindung kann im Zusammenhang mit automatisierten Schweißprozeßen, bei denen ein Lichtbogenschweißbrenner von einem Schweißroboter geführt und bewegt wird, besonders vorteilhaft sein. Hier besteht das Problem, daß zum Austausch einer verschlissenen Drahtseele möglicherweise nicht nur die Lichtbogenschweißbrennereinrichtung selbst ganz oder teilweise demontiert werden muß. Möglicherweise muß auch die Lichtbogenschweißbrennereinrichtung selbst vom Roboter entfernt werden, damit ein Zugang zur Drahtseele besteht und ein Austausch der Drahtseele ermöglicht wird. Je umfangreicher eine Demontage erfolgen muß, umso umfangreicher und zeitaufwändiger gestaltet sich auch die nachfolgende Montage wieder. Es kann sogar aufgrund der Demontage ein erneutes zeitaufwändiges Teach-In des Schweissroboters mit der daran angebrachten Lichtbogenschweißbrennereinrichtung hinzukommen. Um eine weitgehende Demontage und eine nachfolgende erneute Einrichtung der automatischen Schweißanlage zu vermeiden, kann deshalb der erfindungsgemäße Drahtseelenaustausch von der Schweißprozeßseite her, zusammen mit dem erfindungsgemäßen Positionssignalisationsmittel besondere Vorteile mit sich bringen. Hiermit kann ein Austausch der Drahtseele schnell und ohne umfangreiche Demontagearbeiten und trotzdem sicher eine positionskorrekte Anordnung der neuen Drahtseele im Inneren der Lichtbogenschweißbrennereinrichtung erfolgen.

Im Zusammenhang mit der vorliegenden Erfindung kann dieser Vorteil besonders ausgeprägt sein, wenn als Roboter ein Hohlwellenroboter, wie beispielsweise ein solcher vom Typ "Motoman", welche vom Hersteller Yaskawa Europe GmbH, 65760 Eschborn, Deutschland, als Schweißroboter angeboten werden, zum Einsatz kommt. Bei derartigen Hohlwellenrobotern werden die Schweißmedien, wie der Schweißdraht, Schutzgas und elektrischer Strom, durch die als rotatorisch angetriebene Hohlwelle ausgebildete Aufnahme für die Anbringung der Lichtbogenschweißbrennereinrichtung am Roboter, im wesentlichen oder zumindest näherungsweise konzentrisch zur Drehachse der Hohlwelle durchgeführt. Eine Demontage der Lichtbogenschweißbrennereinrichtung selbst und von der Aufnahme des Roboters ist hier besonders arbeitsaufwändig. Ein solcher Hohlwellenroboter und eine besonders vorteilhafte Lösung für eine mit diesem Hohlwellenroboter zusammenwirkenden Lichtbogenschweißbrennereinrichtung ist beispielsweise in der EP 1 689 550 B1 beschrieben.

Ein Lichtbogenschweißbrenner, der zur Anordnung an einem Schweißroboter vorgesehen ist, der einen Roboterarm aufweist, kann deshalb eine relativ zum Roboterarm drehbare Anschlußeinrichtung aufweisen, die eine Befestigungseinrichtung zur Anbringung der Schweißbrennervorrichtung am Schweißroboter, eine Aufnahmeeinrichtung zur Halterung eines Schweißbrenners und zur Übertragung von angetriebenen rotatorischen Bewegungen auf den Schweißbrenner, einen elektrischen Anschluß für ein Schweißstromkabel, mittels dem eine Roboterseite der Schweißbrennervorrichtung mit einer Schweißstromquelle elektrisch verbindbar ist, und eine Stromübertragungseinrichtung, über die das Schweißstromkabel mit einer Schweißbrennerseite der Schweißbrennervorrichtung elektrisch verbindbar ist, umfasst. Die Stromübertragungseinrichtung kann einen Stator aufweisen, der gegenüber dem Roboterarm zur drehfesten Anordnung vorgesehen ist, jedoch in Bezug auf die schweißroboterseitige Anschlußeinrichtung relativ drehbar ist. Ferner kann eine Durchführung des Stators, durch die zumindest einer der für den Schweißvorgang benötigten Verbrauchsstoffe in Richtung zur Aufnahmeeinrichtung durchführbar ist vorgesehen sein, wobei die Aufnahmeeinrichtung und die Befestigungseinrichtung als Rotor ausgebildet sind, die hierdurch relativ gegenüber dem Stator rotierbar sind, und die Aufnahmeeinrichtung und/oder die Befestigungseinrichtung mittels einer elektrischen Kontakteinrichtung mit dem Stator elektrisch leitend verbindbar sind, wobei die Befestigungseinrichtung des Rotors zur Anbringung an der Anschlußeinrichtung des Roboters ausgebildet ist, und durch die Anbringung an der Anschlußeinrichtung des Roboters eine Drehachse des Rotors mit der Drehachse der Anschlußeinrichtung des Roboters zumindest im wesentlichen fluchtet und der Rotor um die Drehachse sowie um den Stator drehbar ist.

Es kann ferner bevorzugt sein, wenn bei einer erfindungsgemäßen Lichtbogenschweißbrennereinrichtung eine entlang der Drehachse des Rotors verlaufende Ausnehmung vorgesehen ist, welche bezüglich der Drehachse zentrisch (fluchtend) sowohl durch die Befestigungseinrichtung als auch durch die Aufnahmeeinrichtung verläuft, wobei sowohl eine Eingangsöffnung der Ausnehmung im Stator als auch eine Ausgangsöffnung der Ausnehmung im Rotor bezüglich der Drehachse ebenfalls zentrisch und damit fluchtend angeordnet sind. Bei dieser besonders bevorzugten Lösung für Hohlwellenroboter befindet sich somit die Eingangsöffnung im Lichtbogenschweißbrenner für vom Schweißkabel kommende Schweißmedien entlang der Rotationsachse des Lichtbogenschweißbrenners. Ebenso befindet sich die Ausgangsöffnung für einen Austritt von Schweißmedien aus dem Rotor heraus und deren Übertritt in den Schweißbrennerhals, ebenfalls fluchtend mit der Rotationsachse des Rotors. Vorzugsweise verläuft somit die gesamte Ausnehmung entlang der Rotationsachse des Rotors und damit auch der roboterseitigen Anschlußeinrichtung, mit welcher Rotationsbewegungen des Rotors um den Stator erzeugt und vom Roboter auf den Rotor übertragen werden.

In bevorzugten Ausführungsform der Erfindung kann somit der Schweißdraht am drahtvorschubseitigen Ende in die Lichtbogenschweißbrennereinrichtung eingeführt und durch die Drahtseele bis zum prozeßseitigen Ende der Lichtbogenschweipbrennereinrichtung durchgeführt sein. Während des Einsatzes der Lichtbogenschweißbrennereinrichtung wird aufgrund der im Prozeßbereich abschmelzenden Schweißdrahtspitze der Schweißdraht nachgeschoben. Der Schweißdraht wird hierdurch durch die gesamte Lichtbogenschweißbrennervorrichtung und somit auch durch den Anschlußflansch des Hohlwellenroboters für den Lichtbogenschweißbrenner und durch dessen Stator längsbewegt. Zum Austausch der Drahtseele und ihrer Baugruppe, muß vorzugsweise die Lichtbogenschweißbrennereinrichtung lediglich im Bereich seines prozeßseitigen Endes insoweit geringfügig demontiert werden, dass hier ein Zugriff auf das prozeßseitige Ende der Drahtseele besteht, die dann händisch vollständig aus der Lichtbogenschweißbrennereinrichtung und deren prozeßseitigen Ende herausgezogen werden kann. Die Lichtbogenschweißbrennereinrichtung bleibt hierbei am Anschlußflansch des Hohlwellenroboters unverändert montiert und die verschlissene als auch die neue Drahtseele sowie die jeweils dazugehörenden Baugruppen, vorzugsweise einschließlich des Positionssignalisationsmittels und/oder vorzugsweise des Knickschutzmittels, werden hierbei im Inneren der Lichtbogenschweißbrennereinrichtung und damit durch den roboterseitigen Anschlußflansch bewegt. Der Austausch der Drahtseele kann somit auch bei einem Hohlwellenroboter äusserst schnell und mit wenig Aufwand funktionssicher durchgeführt werden.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: ein bevorzugtes Ausführungsbeispiel einer erfindungsgemäßen Lichtbogenschweißbrennereinrichtung zusammen mit einer Drahtvorschubeinrichtung;
- Fig. 2: eine geschnittene Ausschnittsdarstellung eines hinteren Endbereichs der Lichtbogenschweißbrennereinrichtung aus Fig. 1;
- Fig. 3: eine explosionsartige Darstellung des Ausschnitts aus Fig. 2;
- Fig. 4: eine geschnittene Ausschnittsdarstellung eines hinteren Endbereichs eines weiteren Ausführungsbeispiels einer erfindungsgemäßen Lichtbogenschweißbrennereinrichtung;
- Fig. 5: eine explosionsartige Darstellung des Ausschnitts aus Fig. 4;
- Fig. 6: eine stark schematisierte Darstellung eines als Schweißroboter vorgesehenen Knickarmroboters;
- Fig. 7: eine stark schematisierte prinzipielle geschnittene Darstellung einer Ausführungsform eines Schweißbrenners einer Lichtbogenschweißbrennereinrichtung;
- Fig. 8: eine detailiertere Darstellung der Schweißbrennervorrichtung von Fig. 7;
- Fig. 9: ein Stator der Schweißbrennervorrichtung aus Fig. 8 zusammen mit einer Schleifkontakteinrichtung in einer Schnittdarstellung;
- Fig. 10: eine Seitenansicht der Baugruppe von Fig. 9;
- Fig. 11: eine Ausführungsform eines geeigneten Knickarmroboters;
- Fig. 12: eine vergrößerte Detaildarstellung gemäß der Linie A aus Fig. 11.
- Fig. 13: eine Querschnittsdarstellung der Schleifkontakteinrichtung aus Fig. 10;

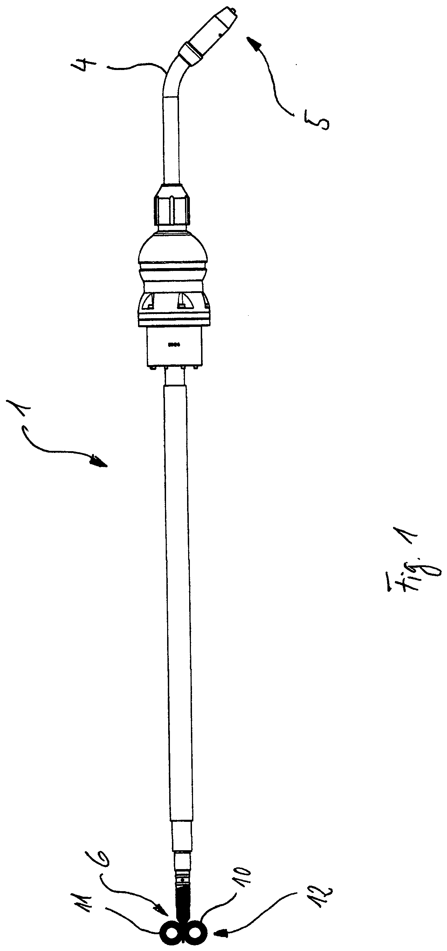

In Fig. 1 ist eine bevorzugte Ausführungsform einer erfindungsgemäßen LichtbogenSchweißbrennereinrichtung 1 dargestellt. Die Lichtbogenschweißbrennereinrichtung 1 ist zur Verwendung in einem Schweißautomaten, wie beispielsweise einem nicht näher dargestellten Schweißroboter, vorgesehen. Die Lichtbogenschweißbrennereinrichtung 1 ist hierbei an einem nicht näher dargestellten Endmanipulator des Roboters angeordnet, der in verschiedenen Raumrichtungen, vorzugsweise in sämtlichen Raumrichtungen auf beliebigen Vorschubwegen bewegbar ist. Der Endmanipulator kann hierdurch den Lichtbogen-Schweißbrenner 1 auf seinem Vorschubweg mitführen und der Lichtbogen-Schweißbrenner 1 an Werkstücken Schweißnähte ausführen. Der Lichtbogen-Schweißbrenner kann hierbei vorzugsweise in prinzipiell gleicher Weise ausgebildet sein, wie der in der WO 2005/049259 A1 offenbarte und beschriebene Lichtbogen-Schweißbrenner, wobei Unterschiede hinsichtlich des Endbereichs des Lichtbogen-Schweißbrenners aus Fig. 1 vorhanden sind, auf die nachfolgend eingegangen wird. Durch die nicht zwingend notwendige, jedoch besonders bevorzugte Ausführungsform des Lichtbogen-Schweißbrenners 1, wonach dieser einen außenliegenden Statorteil und einen innenliegenden Rotorteil aufweist und eine Zuführung und Versorgung der Schweißstelle mit Schweißmedien zumindest im wesentlichen entlang einer und koaxial zu einer Rotationslängsachse 3 der Lichtbogenschweißbrennereinrichtung und des Endmanipulators erfolgt, kann eine Endlosrotationsmöglichkeit des Schweißbrenners erreicht und eine Verdrillung eines Schweißkabels bei Rotationsbewegungen vermieden werden. Es wird explizit darauf hingewiesen, dass der hier gezeigte und erörterte Lichtbogen-Schweißbrenner lediglich beispielhaft für die Erfindung angeführt ist und die Erfindung grundsätzlich auch im Zusammenhang mit anderen Typen von Lichtbogenschweißbrennern und insbesondere auch mit Lichtbogenschweißbrennereinrichtung zum Einsatz kommen kann, deren konkreter Aufbau vom Aufbau der nachfolgend erörterten Lichtbogenschweißbrennereinrichtung abweicht.

Beim lediglich beispielhaft für die Erfindung dargestellten Lichtbogenschweißbrennereinrichtung 1 handelt es sich um einen nach dem Metall-Schutzgas Schweißverfahren arbeitenden Schweißbrenner 1. Bei diesem wird ein beim Schweißprozeß abschmelzender Schweißdraht 7 der vorgesehenen Schweißstelle zu- und aufgrund des Verbrauchs des Schweißdrahts 7 während eines Schweißprozesses kontinuierlich nachgeführt. Der Schweißdraht 7 wird hierbei in der Regel zusammen mit seiner Drahtseele 8a und vorzugsweise einer den Schweißdraht umgebenden Isolierung durch das Innere des Schweißbrenners 1, meistens durch ein Mantelrohr 2, zugeführt. Zusätzlich wird ein Schutzgas der Schweißstelle zugeführt, in der Regel ebenfalls durch das Mantelrohr 2. Im Ausführungsbeispiel ist das Schutzgas ein Inertgas, in anderen erfindungsgemäßen Ausführungsbeispielen kann als Schutzgas auch ein Aktivgas - oder eine Mischform von beiden - zugeführt werden. Im bevorzugten Ausführungsbeispiel wird zudem im Bereich des hinteren freien Endes 6 der Lichtbogenschweißbrennereinrichtung Strom in die Lichtbogenschweißbrennereinrichtung 1 eingeleitet und durch die Lichtbogenschweißbrennereinrichtung zur Schweiß- bzw. Prozeßstelle geleitet, der dazu genutzt wird, an der Schweißstelle bzw im Bereich des schweißprozeßseitigen Endes 5 der Lichtbogenschweißbrennereinrichtung, einen Lichtbogen zu zünden und für den Schweißvorgang aufrecht zu erhalten. Die Lichtbogenschweißbrennereinrichtung 1 ist deshalb in ihrem Einsatz mit einer nicht dargestellten Schweißstromquelle und einem Drahtvorschubmittel 12 verbunden bzw versehen. In bevorzugten Ausführungsbeispielen können sowohl der Schweißdraht, als auch das Schutzgas und der Strom über ein an sich bekanntes Schweißkabel, insbesondere ein Koaxialschweißkabel, dem Lichtbogenschweißbrenner an seiner Stromanschlußstelle zugeführt werden. An einer Gasanschlußstelle der Lichtbogenschweißbrennereinrichtung 1 wird das Schutzgas in eine Durchleitung 9 des Schweißbrenners 1 in dessen Inneres zur Durchführung des Schutzgases von der Anschlußstelle zum freien Ende an die Schweißstelle, eingeleitet. Der Strom wird ebenso vom Schweißkabel durch den Schweißbrenner 1 zur Schweiß- bzw. Prozeßstelle geleitet. Auch der Strom wird im Inneren des Schweißbrenners zur Prozeßstelle geleitet und zwar in einer Weise, in welcher eine Außenseite der Lichtbogenschweißbrennereinrichtung 1 stromfrei ist.

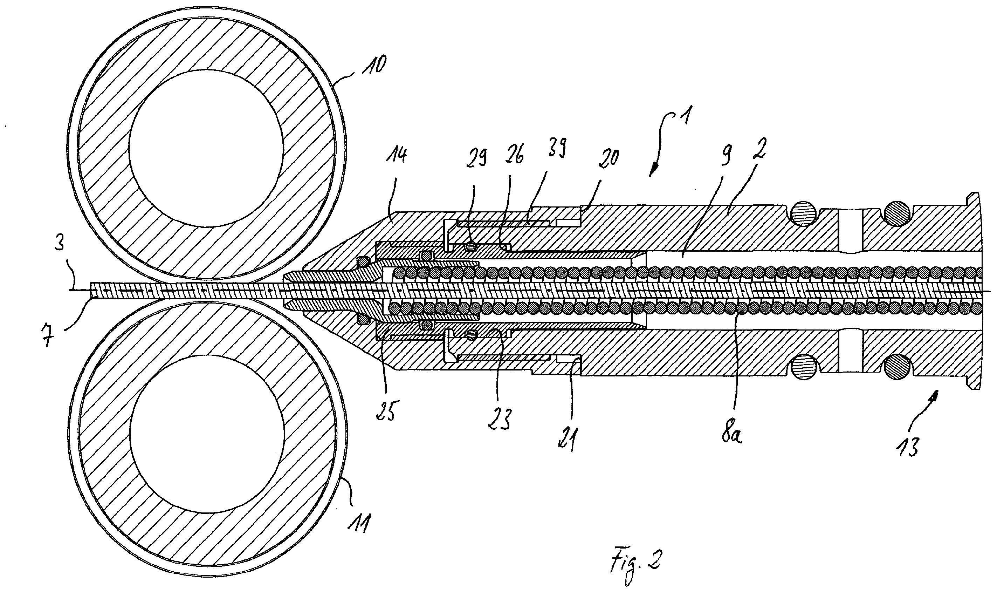

Die Lichtbogeschweißbrennereinrichtung 1 weist somit einen Brennerhals 4 auf, der mit einem Schlauchpaket 2 verbunden ist. Das Schlauchpaket 2 verläuft in etwa vom hinteren Ende 6 der Lichtbogenschweißbrennereinrichtung 1 bis zum Schweißbrenner am vorderen schweißprozeßseitigen Ende 5. Im Bereich des hinteren Endes 6, das in Fig. 2 gezeigt ist, sind im Inneren des Lichtbogenschweißbrenners 1 mehrere austauschbare Verschleißteile angeordnet, auf die nachfolgend näher eingegangen wird.

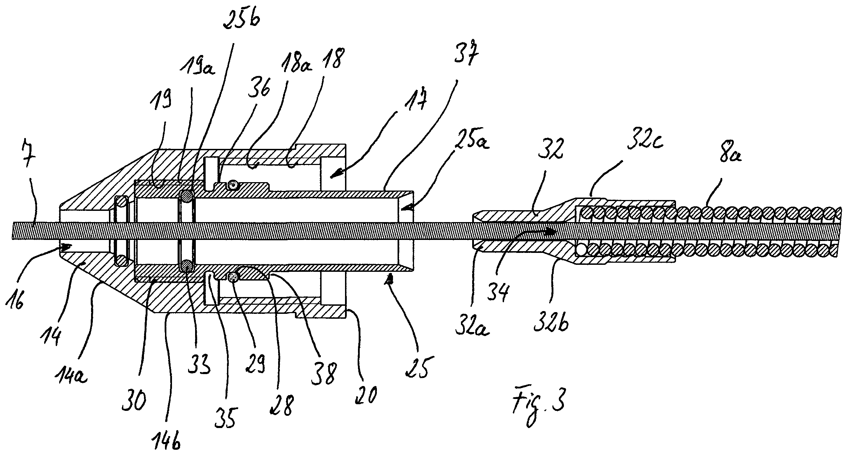

In Fig. 2 ist in einer Ausschnittsdarstellung das der Schweißprozeßstelle und dem dazugehörenden vorderen offenen Ende 5 der Lichtbogenschweißbrennereinrichtung 1 abgewandten hinteren Ende 6 des Lichtbogenschweißbrennereinrichtung 1 zusammen mit zwei Antriebsrollen 10, 11 einer Drahtvorschubeinrichtung 12 dargestellt. In dieser Darstellung ist der Schweißdraht 7 zwischen den beiden mit ihren Umfangsflächen sich gegenüberliegenden Antriebsrollen 10, 11 gezeigt. Die Antriebsrollen 10, 11 befinden sich unmittelbar gegenüber dem der Prozeßstelle des Lichtbogenschweißbrenners 1 abgewandten hinteren Ende 6 der Lichtbogenschweißbrennereinrichtung 1. Dieses stirnseitige Ende 6 des näherungsweise röhrenförmigen Mantelrohrs schließt mit einer Endkappe 14 ab, die entlang der zentrischen Achse 3 des Gehäuses 14 eine zum stirnseitigen äußeren Ende der Endkappe 14 hin offene Durchgangsbohrung 16 (Fig. 3) aufweist. Die Endkappe 14 ist zum prozeßseitigen Ende der Lichtbogenschweißbrennereinrichtung hin offen und von dort, in Richtung zur offenen Durchgangsbohrung 16 mit einer gestuften zentrischen Ausnehmung 17 versehen. Letztere weist zunächst einen konstanten größeren Durchmesser 18 auf, der in einen im Vergleich hierzu konstanten kleineren Durchmesser 19 der Ausnehmung übergeht. Letzterer Bereich wiederum geht in die Durchgangsbohrung 16 über. Die innere Umfangsfläche des Bereichs des kleineren Durchmessers 19 ist mit einem Innengewinde 19a versehen. Ebenso weist auch die innere Umfangsfläche des Bereichs des größeren Durchmessers 18 ein Innengewinde 18a auf. Letzteres reicht bis kurz vor den Übergang zum kleineren Durchmesser 19.

Die Außen- bzw Mantelfläche der Endkappe 14 weist einen sich vom Ende in Richtung zur Prozeßstelle hin konisch erweiternden Abschnitt 14a auf, der in einen Abschnitt 14b der Mantelfläche mit konstantem Durchmesser übergeht. Mit seiner zur Prozeßstelle weisenden Stirnseite 20 stößt die Endkappe 14 an einen äußeren Absatz 21 des Mantelrohrs 2 des Lichtbogen-Schweißbrenners 1. Das Mantelrohr 2 ragt in den Bereich des größeren Innendurchmessers 18 der Endkappe 14 bis kurz vor dem Übergang zum kleineren Durchmesser 19 hinein. Ein innerer Durchmesser 23 einer Durchgangsausnehmung des Mantelrohrs 2 im Bereich von dessen stirnseitigem Ende entspricht dem kleineren Durchmesser 19 der Ausnehmung 17 der Endkappe 14. so dass ein hülsenförmiger Einlaufkörper 25 mit seiner äußeren Mantelfläche zumindest im wesentlichen formschlüssig im Mantelrohr 2 aufgenommen werden kann. Zur Positionssicherung des hülsenförmigen Einlaufkörpers 25 in axialer Richtung weist die Durchgangsausnehmung 24 des Mantelrohrs 2 einen Absatz 26 zu einem kleineren Innendurchmesser auf, wobei der Absatz als Anschlag für den Einlaufkörper 25 vorgesehen ist.

Im Bereich des Mantelrohrs 2 ist an der Außenfläche bzw an der äußeren Mantelfläche des hülsenförmigen Einlaufkörpers 25 ein Einstich 28 bzw eine radial umlaufende Nut ausgebildet, die zur Aufnahme eines Dichtelements 29 oder Dichtmittels, wie insbesondere ein O-Ring, vorgesehen ist. Ein Abschnitt der Außenfläche des Einlaufkörpers 25, der sich gegenüber dem kleineren Durchmesser 19 der Ausnehmung der Endkappe 14 befindet, ist mit einem Außengewinde 30 versehen, welches in das Innengewindes 19a der zylindrischen Umfangsfläche des Abschnitts mit dem kleineren Durchmesser 19 der Ausnehmung 17 der Endkappe 14 einschraubbar ist.

Der hülsenförmige Einlaufkörper 25 ist mit einer Durchgangsausnehmung 25a ausgebildet, die mit einem durchgängig konstanten Innendurchmesser versehen ist. Lediglich im Bereich, in dem in der Durchgangsausnehmung 25a des Einlaufkörpers 25 sich ein mit dem Einlaufkörper vorzugsweise verbindungslos angeordnetes Führungselement 32 befindet, weist die Ausnehmung 25a einen Einstich 25b oder Nut zur Anordnung eines Dichtelements 33 oder Dichtmittels, wie insbesondere einen O-Ring auf. Das in der Nut 25b des Einlaufkörpers 25 angeordnete Dichtelement hat somit Kontakt mit der äußeren Mantelfläche des Führungskörpers 32.

Der Einlaufkörper 25 weist eine äußere Mantelfläche mit unterschiedlichen Abschnitten auf, die sich vor allem in der Größe der Außendurchmesser voneinander unterscheiden. Im gezeigten Ausführungsbeispiel weist ein erster, dem hinteren Ende des Lichbogenschweißbrenners nahen Abschnitt der äußeren Mantelfläche das Außengewinde 30 auf, mit welchem der Einlaufkörper 25 in das Innengewinde 19a der Endkappe 14 eingeschraubt und hierdurch mit der Endkappe 14 lösbar verbunden ist. In Richtung zum prozeßseitigen Ende 5 der Lichtbogenschweißbrennereinrichtung 1 hin, schließt sich an das Außengewinde 30 ein Einstich 35 an, an den sich wiederum ein gewindeloser Abschnitt 36 der äußeren Mantelfläche anschließt, welcher den gleichen Außendurchmesser aufweist, wie der Gewindeabschnitt 30. Der gewindelose Abschnitt 36 weist die umlaufende Nut 28 auf, in die das weitere Dichtelement 29 aufgenommen werden kann, im Fall des dargestellten Ausführungsbeispiels ein O-Ring.

In Richtung zum prozeßseitigen Ende 5 schließt sich dann ein weiterer, letzter, Abschnitt 37 der äußeren Mantelfäche des Einlaufkörpers 25 an, welcher ebenfalls einen konstanten, aber geringeren Außendurchmesser als der vorangehende Abschnitt aufweist. Durch den mittels der Durchmesseränderung ausgebildeten Absatz 38 zwischen dem letzten Abschnitt 37 der äußeren Mantelfläche und dem diesen vorausgehenden Abschnitt 36, ergibt sich am Einlaufkörper eine Einschub- bzw. eine Eindrehbegrenzung für das Mantelrohr 2.

Das Mantelrohr 2 wiederum weist im Bereich seines vorderen Endes an seiner äußeren Mantelfläche ein Außengewinde 39 auf, auf welches die Endkappe 14 mit ihrem Innengewinde 18a aufgeschraubt ist. Die Einschraubbewegung wird durch ein Anstossen der Stirnseite 20 der Endkappe 14 am Absatz 21 des Mantelrohrs begrenzt. Das Erreichen dieser Position kann eine optische Kontrollmöglichkeit darstellen, dass die Endkappe korrekt montiert und verschraubt ist.

In Fig. 3 ist das drahtvorschubseitige bzw hintere Ende 6 der Lichtbogenschweißbrennereinrichtung 1 in einer explosionsartigen Darstellung und Situation gezeigt, wie sie sich auch beim Wechseln der Drahtseele 8a ergibt. Wie hier zu erkennen ist, ist im Betrieb der Lichtbogenschweißbrennereinrichtung 1 der Einlaufkörper 25 in die Endkappe 14 eingeschraubt. Ebenso sind sämtliche Dichtungen in ihren Nuten eingesetzt und verbleiben auch während des Wechselns der Drahtseele dort. In der Darstellung von Fig. 3 ist das Mantelrohr 2 nicht dargestellt, das auch während des Wechsels der Drahtseele 8a unverändert mit der Endkappe 14 durch deren gemeinsame Schraubverbindung verbunden ist und verbunden bleibt. Um die Drahtseele 8a zu wechseln, wird zunächst der Lichtbogenschweißbrenner am prozeßseitigen Ende 5 insoweit demontiert, dass die Drahtseele 8a und das Führungselement 32 gemeinsam aus dem prozeßseitigen Ende 5 herausgezogen werden können. Bei einem aktuellen Lichtbogenschweißbrenner der Anmelderin, in welche die hier beschriebene Erfindung zukünftig integriert werden soll, kann beispielsweise hierfür die Gasdüse, eine Stromkontaktdüse und gegebenenfalls ein Düsenstock vom Lichtbogenschweißbrenner gelöst und vom Schweißdraht entfernt werden. Anschließend kann die Drahtseele 8a vom prozeßseitigen Ende 5 aus dem Lichtbogenschweißbrenner herausgezogen werden. Hierbei wird auch der auf der Drahtseele 8a sitzende und mit letzterer durch eine Presspassung verbundene Führungskörper 32, zusammen mit der Drahtseele, aus der Lichtbogenschweißbrennereinrichtung 1 herausgezogen. Das in der Ausnehmung der Endkappe und der Ausnehmung des Einlaufkörpers in diesem Ausführungsbeispiel weitestgehend verbindungslos mit den beiden Bauteilen sitzende Führungselement kann somit ohne zusätzlichen Aufwand, insbesondere auch ohne grösseren Kraftaufwand, aus den beiden Bauteilen sowie aus dem Lichtbogenschweißbrenner 1 zusammen mit der Drahtseele 8a herausgezogen werden. Es ist beim Herausziehen dieser Baugruppe lediglich eine durch eine O-Ringdichtung auf die Mantelfläche des Führungselements wirkende, vergleichsweise geringe Haltekraft zu überwinden.

Anschliessend kann eine neue Drahtseele 8a mit einem seiner beiden Enden auf dem Schweissdraht 7 angeordnet sowie in den Führungskörper 32 eingeführt und angeordnet werden. Danach kann der Führungskörper 32 zusammen mit der Drahtseele 8a gemeinsam und in einem einzigen Vorgang auf dem Schweißdraht 7 in den Schweißbrenner und damit auch in die Lichtbogenschweißbrennereinrichtung 1 eingeschoben werden. Diese Einführbewegung in Richtung auf die Endkappe 14 zu, wird solange fortgeführt bis der Führungskörper 32 mit seinem endkappenseitigen und als Positionsanzeigemittel dienende Ende 32a vollständig durch die offene Durchgangsausnehmung 16 der Endkappe 14 geführt ist und das Ende 32a des Führungselements 32 nach außen aus der Endkappe 14 herausragt. Durch das außerhalb der Lichtbogenschweißbrennereinrichtung 1 mit einem seiner Enden 32a angeordneten und optisch erkennbaren Ende des Führungselements 32 ist eine Kontrollmöglichkeit gegeben, um ohne zusätzlichen technischen Aufwand erkennen zu können, ob der Führungskörper 32 und die Drahtseele 8a innerhalb der Lichtbogenschweißbrennereinrichtung 1 in ihren vorbestimmten Sollpositionen angeordnet sind. Da nur in ihren Sollpositionen auch eine Abdichtung durch den Führungskörper 32 gegen eine Leckage des in der Lichtbogenschweißbrennereinrichtung fließenden Schutzgases gegeben ist, stellt das außerhalb der Endkappe 14 sichtbare Ende 32a des Bauteils des Führungskörpers 32 auch eine Kontrolle dar, ob die neu eingeführte Drahtseele 8a und deren Führungskörper 32 derart angeordnet sind, dass der Lichtbogenschweißbrenner 1 gegen ein Entweichen von Schutzgas aus dem endkappenseitigen Ende 6 des Lichtbogenschweißbrenners 1 abgedichtet ist.

Das Bauteil des Führungskörpers 32 weist den in seiner Gebrauchsposition am Lichtbogenschweißbrenner 1 zur Drahtvorschubeinrichtung weisenden zylindrischen Endbereichsabschnitt 32a auf, der im Ausführungsbeispiel längserstreckt ist und einen konstanten Außendurchmesser aufweist. Der Endbereichsabschnitts 32a geht in einen sich zum prozeßseitigen Ende 5 hin konisch vergrößernden Abschnitt 32b über, an den sich wiederum ein zylindrischer Abschnitt 32c mit größerem, vorzugsweise konstantem, Außendurchmesser anschließt. Im Ausführungsbeispiel der Fig. 2 und 3 weist der Abschnitt 32c einen Absatz zu einem leicht verringerten Außendurchmesser auf. Beim Einschub in die Lichtbogenschweißbrennereinrichtung 1 wird der Führungskörper 32 mit seinem Endbereich 32a voraus in den Einlaufkörper 25 eingeführt. Da ein in Einschubrichtung vorderer Außendurchmesser des Abschnitts 32c in etwa dem Innendurchmesser der Durchgangsausnehmung 25a des Einlaufkörpers 25 entspricht, wird der Führungskörper bei seiner Vorschubbewegung innerhalb des Einlaufkörpers geführt. Hierdurch ist auch der Endbereichsabschnitt 32a lagekorrekt ausgerichtet und hierbei konzentrisch um die Längsachse 3 angeordnet und kann in die Durchgangsausnehmung 16 der Endkappe 14 eingeführt werden. Da der Endbereichsabschnitt 32a einen konstanten Außendurchmesser aufweist, der nur geringfügig geringer ist, als der Durchmesser der Durchgangsausnehmung 16 kann der Endbereichsabschnitt 32a vollständig in die Durchgangsausnehmung eingeführt und ein Teil des Endbereichsabschnitts 32a aus der Durchgangsausnehmung 16 der Endkappe nach außen herausgeführt werden. Dieser Teil des Endbereichsabschnitts, der als Positionsanzeigemittel bezeichnet werden kann, ist somit in seiner Endposition im Schweißbrenner 1 von außen erkennbar und befindet sich vergleichsweise nahe zur Angriffsstelle der Drahtvorschubeinrichtung, an welcher die Vorschubbewegung auf den Schweißdraht 7 aufgebracht wird. Dieses Positionsanzeigemittel kann zur von außen optisch wahrnehmbaren Signalisation einer positionsgerechten Anordnung des Führungskörpers und der Drahtseele 8a im Inneren des Lichtbogenschweißbrenners dienen.

Das einstückige Bauteil des Führungskörpers 32 ist mit einer Durchgangsausnehmung 34 versehen, die im Bereich des Endbereichsabschnitts 32a einen vorzugsweise konstanten Durchmesser aufweist, der nur geringfügig größer ist, als der Durchmesser des in diesem Fall benutzten Schweißdrahts. Im Bereich des Abschnitts 32c mit dem größeren Außendurchmesser weist die Durchgangsausnehmung 34 einen größeren, aber ebenfalls konstanten Durchmesser auf, wodurch in diesem Bereich der Durchgangsbohrung das hintere Ende der Drahtseele 8a angeordnet werden kann. Der Innendurchmesser der Ausnehmung 34 in diesem Bereich entspricht in etwa dem Außendurchmesser der Drahtseele. Mit seinem stirnseitigen Ende stößt die Drahtseele 8a an den sich durch die Durchmesseränderung in der Durchgangsausnehmung 34 ergebenden Absatz 34a an. Durch die Einstückigkeit des Führungskörpers 32 ergeben sich gute Führungseigenschaften für den Schweißdraht im Führungskörper 32, mit einer höchstens geringen Gefahr, dass der Schweißdraht 7 bei seiner Bewegung sich verhakt und dadurch ausknickt.

Zur Vermeidung eines Verhakens des Schweißdrahts 7 am bzw im Führungskörper 25 während der Vorschubbewegung und zur erleichterten Einführung eines Schweißdrahtendes in den Führungskörpers 25 kann eine Anfasung der Öffnung der Durchgangsausnehmung 34 im Bereich der Stirnseite des Endbereichs 32a des Führungskörpers beitragen.

Es kann ferner vorgesehen sein, für unterschiedliche Schweißdrähte unterschiedliche Führungselemente 32 mit unterschiedlichen Durchmessern der Durchgangsausnehmung 34 vorzusehen. Ein solches System kann insbesondere in ihrer geometrischen Außenform identische Führungskörper aufweisen, die sich aber hinsichtlich der Durchmesser der jeweiligen Durchgangsausnehmung 34 sowie gegebenenfalls auch hinsichtlich der verwendeten Werkstoffe der Führungselemente unterscheiden, wodurch auch in vorteilhafter Weise eine Anpassung an den jeweiligen Werkstoff des Schweißdrahts stattfinden kann.

Das aus der Endkappe 14 herausragende Ende 32a des Bauteils des Führungselement 32, in welchem der Schweißdraht 7 geführt ist, verkürzt zudem die freie und ungeführte Länge des Schweißdrahts zwischen der Drahtvorschubeinrichtung und der Lichtbogenschweißbrennereinrichtung 1. Auch durch den geringeren Außendurchmesser des Endes des Bauteils des Führungselements 32 im Vergleich zum stirnseitigen Ende der Endkappe, kann das aus der Lichtbogenschweißbrennereinrichtung hinausragende Bauteil des Führungselements näher zur Kontaktstelle des Schweißdrahts mit den beiden Vorschubrollen der Drahtvorschubeinrichtung angeordnet werden. Der Schweißdraht wird somit früher durch das Bauteil des Führungselements aufgenommen und von diesem geführt, was die Gefahr eines Ausknickens des Schweißdrahts verringert. Der Abschnitt des Bauteils des Führungselements mit dem geringeren Außendurchmesser, welcher durch die Endkappe 14 geführt und aus dieser hinausragt, kann als Knickschutzmittel bezeichnet werden.

Durch die Erfindung ergibt sich zudem der Vorteil, daß anders als es bisher üblich war, die Endkappe 14 weder den Schweißdraht 7 noch die Drahtseele 8a führt oder berührt und damit die üblicherweise aufwendig gestaltete Endkappe 14 kein Verschleißteil mehr ist.

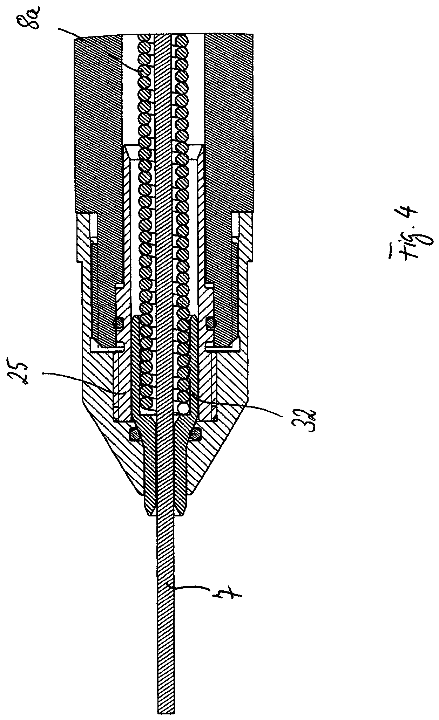

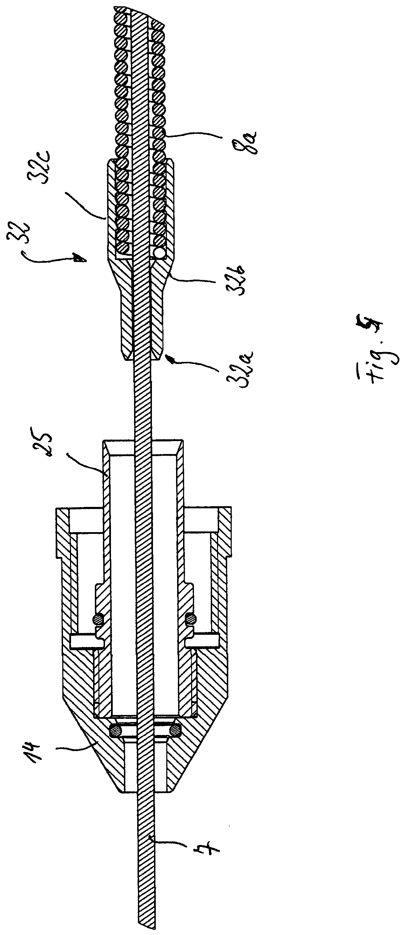

In den Darstellungen von Fig. 4 und 5 ist ein weiteres bevorzugtes Ausführungsbeispiel der Erfindung dargestellt. Dieses ist weitestgehend identisch mit dem bevorzugten Ausführungsbeispiel aus den Fig. 1 bis 3, weshalb zur Vermeidung von Wiederholungen nachfolgend lediglich auf die Unterschiede eingegangen wird. Die vorstehende Beschreibung zu den Fig. 1 bis 3 wird deshalb auch für das Ausführungsbeispiel der Fig. 4 und 5 durch Bezugnahme aufgenommen.

Der wesentliche Unterschied zum Ausführungsbeispiel einer Lichtbogenschweißbrennereinrichtung nach den Fig. 1-3 besteht darin, dass das Führungselement 32 nach seinem konischen Abschnitt 32b in Richtung zum prozeßseitigen Ende des Brenners gesehen, (nur) einen Abschnitt 32c mit einem größeren Durchmesser aufweist, welcher einen durchgehend konstanten Durchmesser hat. In diesem bevorzugten Ausführungsbeispiel ist somit im Anschluß an den konischen Abschnitt - und in Richtung zum prozessseitigen Ende gesehene - an der äußeren Mantelfläche des Führungselements keine Durchmesservergrößerung vorhanden, die für eine form- und/oder kraftschlüssiges Halten des Führungselements verwendet werden könnte. Zudem liegt bei dieser bevorzugten Ausführungsform kein Dichtelement, wie beispielsweise das Dichtelement 33 aus dem anderen Ausführungsbeispiel der Fig. 2 und 3, am äußeren Umfang des Abschnitts 32c mit konstantem Durchmesser an. Somit ist auch kein Dichtelement zwischen dem Einlaufkörper 25 und dem Führungselement 32 vorhanden, das auf das Führungselement 32 eine Haltekraft auf das Führungselement 32 ausüben könnte. Dies hat vor allem beim Wechsel der Drahtseele 8a einen Vorteil, da sich aufgrund der fehlenden Haltekraft auf das Führungselement 32, die Drahtseele und das Führungselement einfacher, d.h. mit weniger Kraftaufwand, aus der Lichtbogenschweißbrennereinrichtung in Richtung zum prozeßseitigen Ende hin entnehmen läßt. Da bei erfindungsgemäßen Lichtbogenschweißbrennereinrichtungen jedoch Signalisationsmittel vorhanden sind, mit welchen vorzugsweise während des gesamten Einsatzes des Lichtbogenschweißbrenners mit einer bestimmten Drahtseele deren positionsgerechte Anordnung mittels des Signalisationsmittel überprüft werden kann, sind zusätzliche Haltekräfte auch nicht zwingend erforderlich.

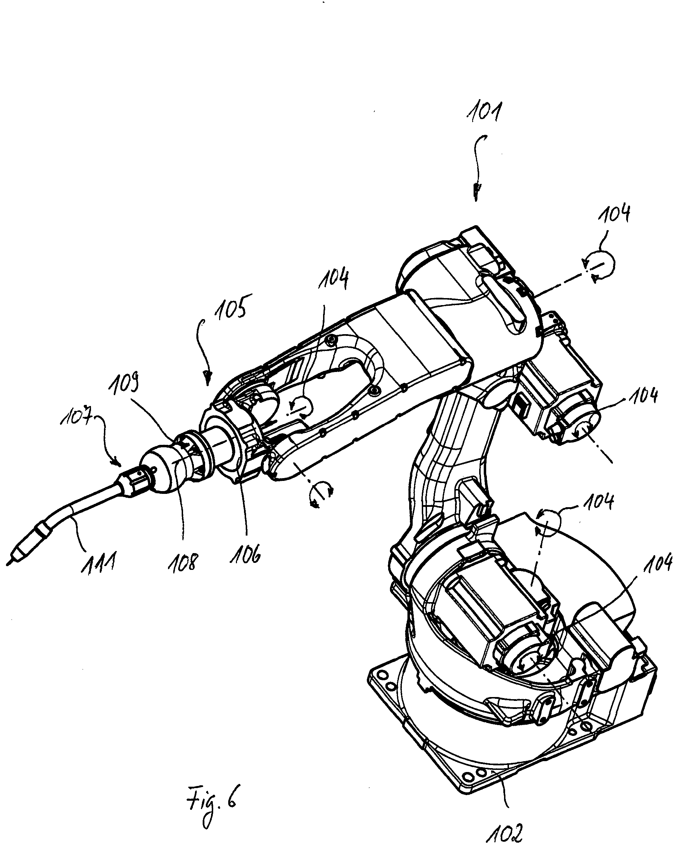

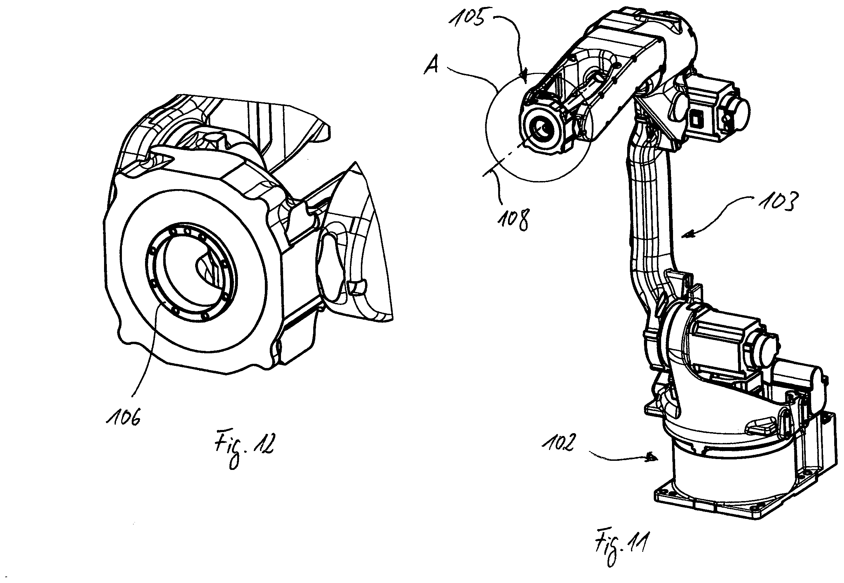

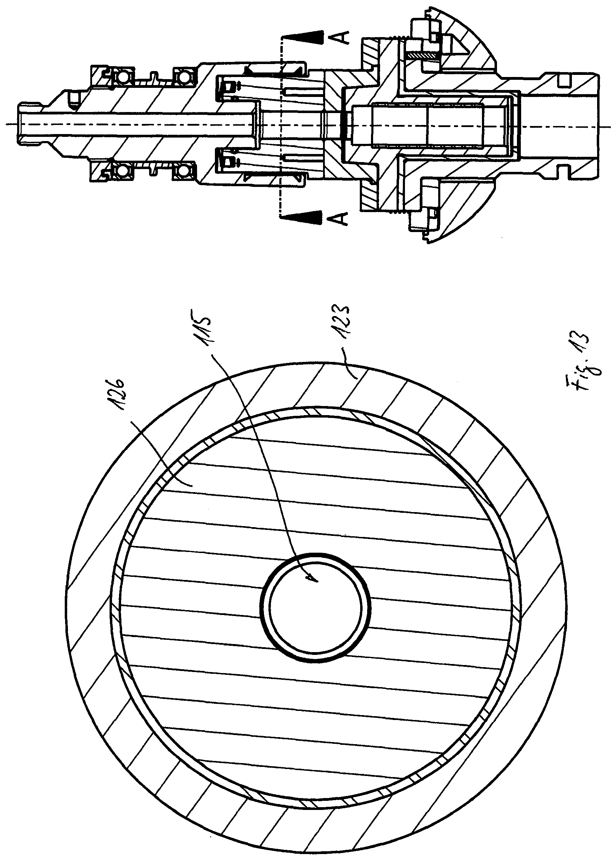

In den Fig. 6 - 13 ist unter anderem ein Knickarmroboter 101 dargestellt, wie er bereits in vielfacher Weise eingesetzt wird. Der Knickarmroboter 101 ist als sogenannter Hohlwellenroboter ausgeführt, der sich im Zusammenhang mit der Erfindung besonders eignet. Derartige geeignete Roboter können beispielsweise die Roboter der AR- oder MA-Serie sein, die von dem Unternehmen Yaskawa Europe GmbH, 65760 Eschborn, angeboten werden. Der Roboter weist ein Gestellteil 102 und einen daran angeordneten Arm 103 auf, der mit mehreren Gelenken 104 versehen ist. Das freie Ende 105 des Armes des Knickarmroboters 101 ist hierdurch in der Lage, beliebige dreidimensional verlaufende Bewegungsbahnen abzufahren.

Am freien Ende 105 des Armes 103 ist der Roboter mit einem Anschlußflansch 106 einer Anschlußeinrichtung versehen, der zur Aufnahme eines Schweißbrenners 107 (Fig. 6) der Lichtbogenschweißbrennereinrichtung vorgesehen ist. Der Anschlußflansch 106 kann um eine Rotationsachse 108 und relativ zum letzten Glied des Armes 103 eine motorisch angetriebene Rotationsbewegung ausführen. In Figur 6 ist ein Distanzblock vor den Brenner eingezeichnet, der als Verlängerung des Anschlussflansches 106 des Roboters dient und fakultativ und nicht zwingend vorgesehen sein kann.

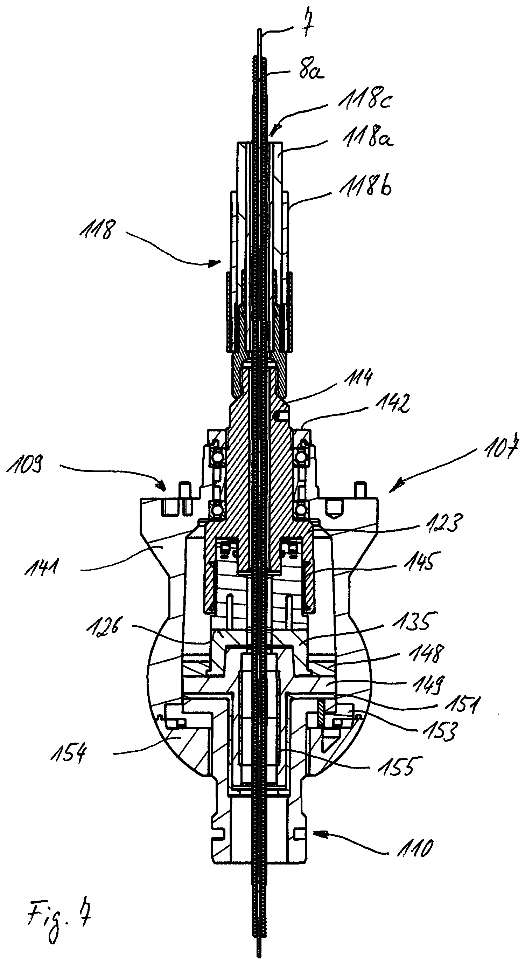

Der in den Figuren 7 bis 10 näher gezeigte Lichtbogenschweißbrenner 107 hat eine Befestigungseinrichtung 109 und eine Aufnahmeeinrichtung 110 (Fig. 7). Die Befestigungseinrichtung 109 ist dazu vorgesehen, den Schweißbrenner 107 mit dem Anschlußflansch 106 des Roboterarmes 103 lösbar, aber drehfest, zu verbinden. Die Aufnahmeeinrichtung 110 dient hingegen zusammen mit einer Kontakteinrichtung zur Aufnahme eines Schweißbrennerhalses 111 des Schweißbrenners 107 und zur nachfolgend noch näher erläuterten Übertragung des Schweißstromes auf den Schweißbrennerhals 111. Da die Aufnahmeeinrichtung 110 in einer nachfolgend noch näher erläuterten Weise über die Befestigungseinrichtung 109 drehfest mit dem Rotationsbewegungen ausführenden Anschlußflansch 106 des Roboters verbindbar ist, werden die Aufnahmeeinrichtung 110 und die Befestigungseinrichtung 109 auch gemeinsam als Teil eines Rotor bezeichnet, der mittels angetriebenen Bewegungen des Anschlußflanschs um die Rotationsachse 108, derartige Rotationsbewegungen ausführen kann. Der Rotor ist hierzu drehfest mit dem Anschlußflansch verbunden, insbesondere lösbar verbunden.

Bezogen auf das letzte Glied des Roboterarmes 103, an dem der Anschlußflansch 106 angebracht ist, ist der Rotor um die Achse 108 drehbar. Der in den Figuren dargestellte Roboter hat insgesamt sechs angetriebene Achsen, wobei diese Anzahl nur beispielhaft für die Einsatzmöglichkeiten des Lichtbogenschweißbrenners ist. Im Zusammenhang mit dem erfindungsgemäßen Lichtbogenschweißbrenner können auch Knickarmroboter mit einer anderen Anzahl an angetriebenen Bewegungsachsen zum Einsatz kommen.

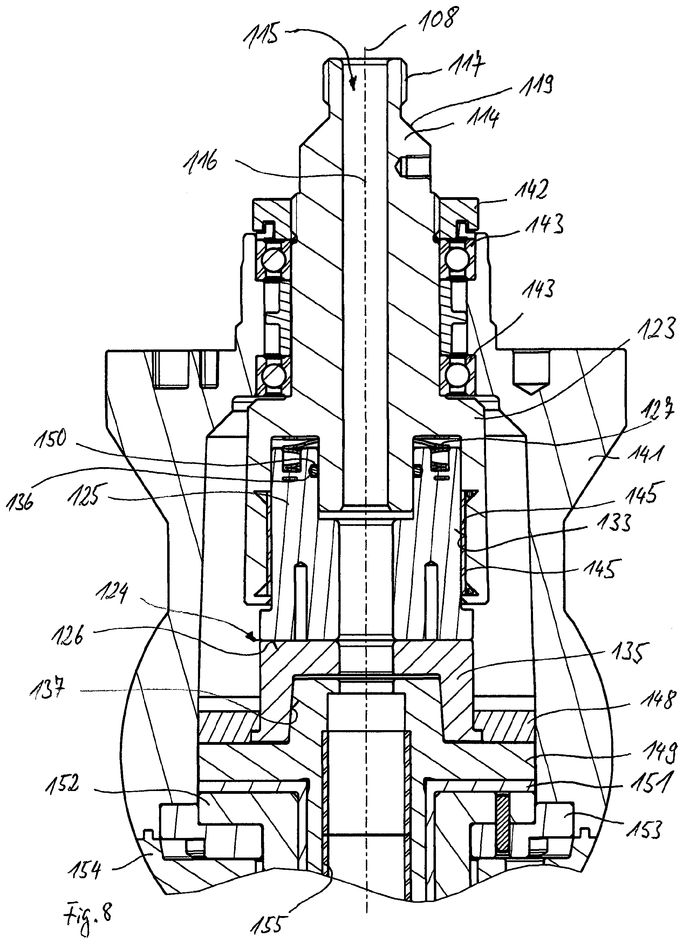

Ein gegenüber dem Rotor und dem letzten Glied des Roboterarmes 103 innenliegender und ortsfester Stator weist eine in der Schweißbrennervorrichtung mittig (zentrisch) angeordnete rohrförmige Durchführung 114 auf, die eine zylindrische Ausnehmung 115 hat. Eine Längsachse 116 der Ausnehmung 115 fluchtet mit der Rotationsachse 108 des Anschlußflansches 106. Die Durchführung 114 erstreckt sich etwa über die gesamte Länge der Befestigungs- und der Aufnahmeeinrichtung. Das obere roboterseitige Ende der Durchführung 114 ist mit einem als elektrischer Anschluß dienendem Außengewinde 117 versehen, auf das ein Koaxialkabel 118 (Fig. 6 und Fig. 7) durch aufschrauben lösbar befestigt werden kann. Zusätzlich zum Gewinde 117 der Durchführung kann auch ein Konus 119 (Fig. 8) als stromleitender Kontakt zwischen einem Schweißstromkabel 118a des Koaxialkabels 118 und der Durchführung 114 vorgesehen sein. Bei einem solchen Koaxialkabel 118 ist das mit einer Außenisolation 118b versehene Schweißstromkabel 118a koaxial um einen mittigen Kanal 118c angeordnet. Der mittige Kanal 118c kann dazu dienen den Schweißdraht 7 durch eine Vorschubbewegung dem Schweißbrenner zuzuführen und ein Schutzgas zum vorderen Ende des Schweißbrenners 107 fließen zu lassen.

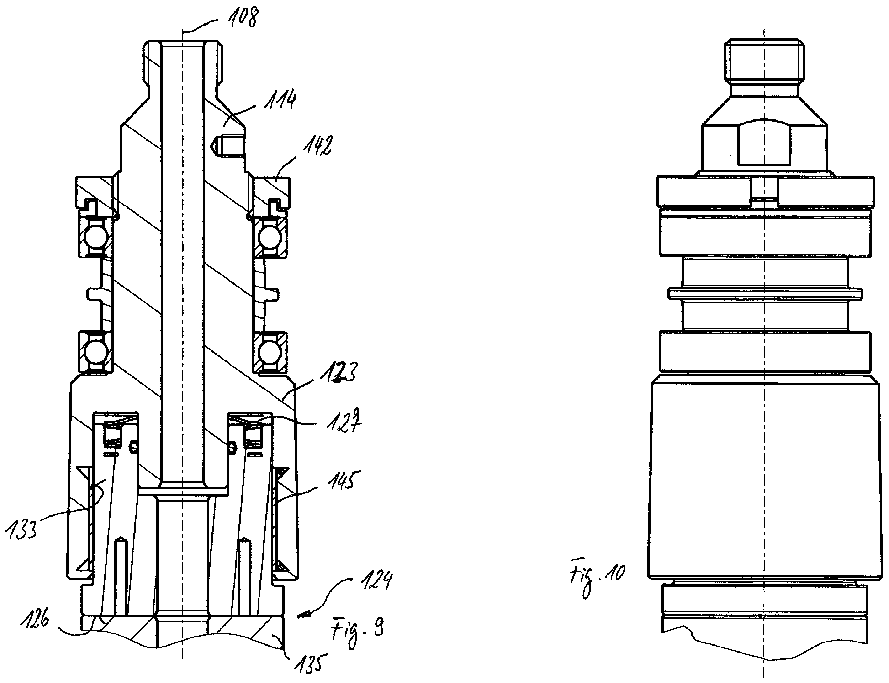

Im Bereich eines in der Darstellung unteren schweißbrennerseitigen Endes wird die Durchführung 114 von einem im Querschnitt kreisrunden glockenförmigen Abschnitt 123 (Fig. 8 und Fig. 9) des Stators umgeben, der mit der Durchführung elektrisch leitend verbunden ist. Im Ausführungsbeispiel sind der glockenförmige Abschnitt 123 und die Durchführung 114 einstückig verbunden. Im wesentlichen innerhalb des glockenförmigen Abschnitts 123 ist an der Durchführung 114 eine Kontakteinrichtung 124 angeordnet, die einen im glockenförmigen Abschnitt angeordneten Schleifring 125 aufweist. Die Kontakteinrichtung 124 weist eine am Schleifring 125 stirnseitig ausgebildete Schleiffläche 126 auf. Die Schleiffläche 126 ist zum einen von einer parallel zur Längsachse 116 der Durchführung 114 wirkenden Druckfeder 127 kraftbelastet. Die Druckfeder 127 stützt sich innenseitig am glockenförmigen Abschnitt 123 des Stators ab und drückt die Schleiffläche 126 gegen eine ebenfalls im wesentlichen ringförmige Fläche einer Anschlußglocke 135. Sowohl die ringförmige Fläche der Anschlußglocke 135 als auch die Schleiffläche 126 sind Bestandteile einer Kontakteinrichtung 124 und sind jeweils konzentrisch um die Längsachsen 108, 116 angeordnet und von einer Fortsetzung der Ausnehmung 115 durchdrungen.

Zwischen dem Schleifring 125 und einer Innenseite des glockenförmigen Abschnitts 123 befinden sich Kontaktlamellen 145, die den elektrischen Kontakt zwischen dem Schleifring 125 und dem glockenförmigen Abschnitt 123 herstellen. Die Federwirkung der Kontaktlamellen 145 bewirkt, dass ein elektrischer Kontakt zwischen dem Schleifring 125 und einer Innenfläche 133 des glockenförmigen Abschnitts 123 hergestellt wird. Als Werkstoff weist der Schleifring 125 einen guten elektrischen Leiter auf, beispielsweise Kupfer oder eine Kupferlegierung. Die Kontaktlamellen 145 können vorzugsweise entsprechend versilbert sein, um einen besonders guten elektrischen Stromübergang zu gewährleisten. Die der Druckfeder 127 abgewandte Seite des Schleifrings 125 mit seiner Schleiffläche 126 (Fig. 9) ist als feststehendes Bauteil und als Teil des Stators ausgebildet und wirkt als elektrischer Übergang auf den um die Längsachse 108 rotierbaren Rotor, zu dem die Anschlußglocke 135 gehört.

Somit schließt sich an den Schleifring 125 in Richtung der Längsachse 116 der Durchführung 114 und in Richtung auf das schweißbrennerseitige Ende hin die Anschlussglocke 135 (Fig. 8) an, die aufgrund einer vorzugsweise versilberten Oberfläche ebenfalls gut elektrisch leitend ist. Die Durchführung 114, der Schleifring 125 sowie die Anschlußglocke 135 weisen miteinander fluchtende zentrische Bohrungen auf, welche insgesamt Bestandteil einer entlang der Längsachse 108 verlaufenden zentrischen Ausnehmung 115 sind.

Die Druckfeder 127 drückt somit auf den Schleifring 125, der wiederum über seine Schleiffläche 126 auf die Anschlussglocke 135 drückt, und letztere daher ständig mit der Schleiffläche 126 in Kontakt, insbesondere in elektrisch leitendem Kontakt, steht. Die Anschlussglocke 135 ist in Bezug auf ihre axiale Position auf der Durchführung über einen Ring 148 zusätzlich gesichert. Des Weiteren ist die Anschlussglocke 135 über eine konische, versilberte Innenfläche mit der konischen Außenfläche des "Messingflansches mit Buchse" 149 gepaart und axial zentriert. Zudem befindet sich zwischen dem glockenförmigen Element 123 des Stators und dem Schleifring 125 in einer Nut 150 des Schleifrings 125 eine Dichtung 136, mit der sichergestellt werden kann, dass das glockenförmige Element 123 als Teil des Stators gasdicht auf dem Schleifring 125 sitzt.

Ein "Messingflansch mit Buchse" 149, der über einen Konus mit der vorzugsweise versilberten Anschlussglocke 135 gepaart ist, ist über eine Kunststoffisoliertülle 151 mit einem Befestigungselement 152, das Bestandteil der Befestigungseinrichtung ist und als Gegenstück für den Schweißbrenneranschluss dient, verschraubt.

Das Gehäuse 141, ein sich an eine Stirnseite des Gehäuses 141 anschließender Abschlußdeckel 142 und ein sich in Richtung zum Schweißbrennerhals 111 an die andere Stirnseite des Gehäuses 141 anschließender Deckel 154 sind im Ausführungsbeispiel als Kunststoffbauteile ausgebildet. Das Gehäuse 141 beinhaltet im Ausführungsbeispiel auch die Befestigungseinrichtung 109 zur Befestigung am Anschlussflansch 106 an einem Hohlwellenroboter und umschließt und isoliert zusammen mit dem Deckel 154 und dem Abschlußdeckel 142 den inneren Aufbau elektrisch. Die Aufnahmeeinrichtung 110 des Schweißbrenners ist zwar aus metallischem, elektrisch leitenden Werkstoff, jedoch ist diese über die Kunststofftülle 151 mit Flansch als Isolator ebenfalls von stromführenden Bauteilen getrennt. Die Aufnahmeeinrichtung 110 für den Schweißbrenner ist dementsprechend durch das Kunststoffgehäuse 141 und den Deckel 154 hindurchgeführt.

Die als Bestandteil des Kunststoffgehäuses 141 ausgeführte Befestigungseinrichtung 109 ist drehfest aber lösbar mit dem Anschlussflansch des Roboters 106 verbunden. Ebenfalls drehfest mit dem Kunstoffgehäuse 141 verbunden ist die Aufnahmeeinrichtung 110 für den Schweißbrenner, an dessen Befestigungselement 152 ein Schweißbrenner drehfest lösbar verbunden wird. Grundsätzlich ist somit das beim Schweißbrenner außenliegende Gehäuse 141 Bestandteil des Rotors des Lichtbogenschweißbrenners. Dieser Rotor ist konzentrisch zum innenliegenden Stator des Lichtbogenschweißbrenners und bezüglich der Rotationsachse 108 angeordnet und kann sich aufgrund von motorisch angetriebenen Rotationsbewegungen des Anschlußflanschs 106 des Roboters relativ zum innenliegenden Stator um letzteren drehen. Der Stator ist hingegen bei einer gemeinsamen Rotationsbewegungen des Rotors mit dem roboterseitigem Anschlußflansch 106 ortsfest und dreht sich hierbei nicht mit. Im Ausführungsbeispiel kann diese ortsfeste Anordnung bezüglich des Anschlußflanschs 106, der Befestigungseinrichtung 109 und des Rotors- insgesamt beispielsweise dadurch erreicht werden, dass das Schweißkabel am Gewinde 117 der Durchführung 114 befestigt ist und aufgrund der Torsionssteifigkeit des Schweißkabels in seiner rotativen Position fixiert ist. In anderen Ausführungsformen der Erfindung kann auch eine zusätzliche Drehsicherung des Stators am Roboter vorgesehen sein.

Hierdurch ist es möglich, eine rotative Antriebsbewegung des Anschlußflansches 106 des Roboters über das Kunststoffgehäuse 141, mit Hilfe eines im Gehäuse 141 angeordneten Befestigungsrings 153 und dem Befestigungselement 152 auf den Schweißbrenner zu übertragen. Der Stator führt diese Drehbewegung hingegen nicht aus, da er über das Koaxialkabel 118 - und gegebenenfalls über weitere Befestigungsmittel - am Roboterarm rotatorisch fixiert ist. Der Widerstand gegen Torsion, die derartige Kabel 118 aufweisen, kann jedoch bereits ausreichen, um den Stator zu fixieren, obwohl aufgrund von nicht ganz auszuschließenden Reibmomenten ein geringer Anteil des Drehmoments der Antriebsbewegung über die Lager 143 möglicherweise auf den Stator übertragen werden kann. Im dargestellten Ausführungsbeispiel weist der Stator zumindest die Bauteile die Durchführung 114 und den Schleifring 125 zusammen mit der Druckfeder 127 auf. Mittels Lager 143, hier im Ausführungsbeispiel Kugellager, ist der Rotor am Stator gelagert.

Das Kunststoffgehäuse 141 wird mit dem Deckel 154, der den Befestigungsring 153 verdeckt, zum Schweißbrenner hin verschlossen. Zum Schweißbrennerkabel hin wird das Gehäuse 141 mittels des Abschlußdeckels 142 abgedeckt. Soweit es erforderlich erscheint, kann der Stator auch beispielsweise über den Abschlußdeckel 142 zusätzlich an einem rotationsfesten Bauteil des Roboters fixiert werden.

Der zur Durchführung eines Schweißprozeßes erforderliche elektrische Strom fließt, beginnend mit dem Schweißstromkabel 118a, das über die Schraubverbindung am Außengewinde 117 mit der Durchführung 114 des Stators verbunden ist, im Stator weiter zum glockenförmigen Abschnitt 123. Dort befinden sich die Kontaktlamellen 145, über die der Strom auf den Schleifring 125 übertragen wird, der ebenfalls zum Stator gehört. Über den Schleifkontakt zwischen der Schleiffläche 126 und der Anschlußglocke 135 wird der Strom auf die versilberte Anschlussglocke 135 übertragen. Die Anschlußglocke 135 ist Bestandteil des Rotors und dreht sich bei einer angetriebenen Rotationsbewegung des Anschlußflanschs 106 zusammen mit dem Gehäuse 141 um die Rotationsachse 108, Die Anschlußglocke 135 besitzt an einer Innenfläche eine konische, ebenfalls versilberte Fläche 137, die mit einem Gegenkonus des Messingflanschs 149 mit Buchse gepaart ist und damit einen fest aufgepressten Sitz hat und somit gute Stromübertragungseigenschaften besitzt. In der Messingbuchse 149 befindet sich eine weitere elektrisch leitfähige Kontaktlamelle 155 X6, mit welcher der Schweißstrom auf den Schweißbrenner über ein eingestecktes Innenrohr übertragen wird. Die Befestigung des Brenners erfolgt über das zum Innenrohr isolierte Befestigungselement 152.

Das Schutzgas kann über das Koaxialkabel 118 durch die Ausnehmung 115 der Durchführung 114 zum Schweißbrennerhals 111 strömen. Der Schweißdraht 7 kann auf dem gleichen Weg ebenfalls dem Schweißbrennerhals 111 zugeführt und jeweils nachgeschoben werden. Soweit es erforderlich ist, kann ein nicht dargestelltes Datenkabel in das Koaxialkabel 118 integriert sein.

**Bezugszeichenliste**

| | | | |
|---|---|---|---|
| 1 | Lichtbogenschweißbrenner | 25b | Einstich/Nut |
| 2 | Mantelrohr | 26 | Absatz |
| 3 | Längsachse | 28 | Einstich/Nut |
| 4 | Brennerhals | 29 | Dichtelement |
| 5 | schweißprozeßseitiges Ende | 30 | Außengewinde (von 25) |
| 6 | hinteres Ende | 32 | Führungselement |
| 7 | Schweißdraht | 32a | Ende/Endbereich |
| 8a | Drahtseele | 32b | konischer Abschnitt |
| 9 | Durchleitung | 32c | Abschnitt |
| 10 | Antriebsrolle | 33 | Dichtelement |
| 11 | Antriebsrolle | 34 | Durchgangsaunehmung |
| 12 | Drahtvorschubeinrichtung | 34a | Absatz |
| 13 | Gehäuse | 35 | Einstich |
| 14 | Endkappe | 36 | gewindeloser Abschnitt |
| 14a | konischer Abschnitt | 37 | Abschnitt mit kleinerem Durchmesser |
| 14 | zylindrischer Abschnitt | | |
| 16 | offene Durchgangsbohrung | 38 | Absatz |
| 17 | gestufte zentrische Ausnehmung | 39 | Außengewinde (von 2) |
| | | 101 | Knickarmroboter |
| 18 | größerer Durchmesser | 102 | Gestell |
| 18a | Innengewinde | 103 | Arm |
| 19 | kleinerer Durchmesser | 104 | Gelenk |
| 19a | Innengewinde | 105 | freies Ende |
| 20 | Stirnseite | 106 | Anschlußflansch |
| 21 | äußerer Absatz | 107 | Schweißbrenner |
| 23 | innerer Durchmesser von 2 | 108 | Rotationsachse |
| 24 | Durchgangsausnehmung von 2 | 109 | Befestigungseinrichtung |
| 25 | hülsenförmiger Einlaufkörper | 110 | Aufnahmeeinrichtung |
| 25a | Durchgangsausnehmung | 111 | Schweißbrennerhals |
| 114 | Durchführung | 136 | Dichtung |
| 114a | Längsnut | 137 | Flanschfläche |
| 115 | Ausnehmung | 141 | Kunststoffgehäuse |
| 116 | Längsachse | 142 | Abschlußdeckel |
| 117 | Außengewinde | 142a | Bohrung |
| 118 | Koaxialkabel | 143 | Lager |
| 118a | Schweißstromkabel | 145 | Kontaktlamelle |
| 118b | Außenisolation | 148 | Ring |
| 118c | Kanal | 149 | Messingflansch mit Buchse |
| 119 | Konus | 150 | Nut (von 126) |
| 123 | glockenförmiger Abschnitt | 151 | Kunststofftülle |
| 124 | Kontakteinrichtung | 152 | Befestigungselement |
| 125 | Schleifring | 153 | Befestigungsring |
| 126 | Schleiffläche | 154 | Deckel |
| 127 | Druckfeder | 155 | Kontaktlamelle |
| 129 | Ausnehmung | | |
| 130 | Druckfeder | | |
| 133 | Innenfläche | | |
| 134 | Schleiffläche | | |
| 135 | Anschlussglocke (versilbert) | | |

## Patentansprüche

1. Lichtbogenschweißbrennereinrichtung mit einer abschmelzenden Elektrode,
wobei die Elektrode mit einer Bewegungsrichtung von einem hinteren Ende (6) der Lichtbogenschweißbrennereinrichtung zum Vorschub in Richtung eines vorderen Endes (5) der Lichtbogenschweißbrennereinrichtung vorgesehen ist, in dessen Bereich die Elektrode während eines Lichtbogenschweißprozesses abschmilzt, die Elektrode in der Lichtbogenschweißbrennereinrichtung in einer austauschbaren Drahtseele (8a) geführt ist, wobei die Drahtseele (8a) wiederum zumindest im Bereich des hinteren Endes (6) der Lichtbogenschweißbrennereinrichtung in einem die Drahtseele (8a) umgebenden und als austauschbares Verschleißteil ausgebildetes Führungselement (32) angeordnet ist, wobei das Führungselement (32) der Drahtseele zum gemeinsamen verschleißbedingten Austausch der Drahtseele vorgesehen ist,
**dadurch gekennzeichnet, daß**
für das Führungselement (32) hinsichtlich seiner Einführrichtung in die Lichtbogenschweißbrennereinrichtung eine vorbestimmte Endposition in der Lichtbogenschweißbrennereinrichtung vorgesehen ist, und bei Erreichen der Endposition durch das Führungselement (32) ein Positionssignalisationsmittel außerhalb der Lichtbogenschweißbrennereinrichtung wahrnehmbar ist.

2. Lichtbogenschweißbrennereinrichtung nach Anspruch 1, **dadurch gekennzeichnet, dass** bei Erreichen der Endposition durch das Führungselement (32) ein außerhalb der Lichtbogenschweißbrennereinrichtung angeordnetes Positionsanzeigemittel optisch wahrnehmbar ist.

3. Lichtbogenschweißbrennereinrichtung nach Anspruch 1 oder 2, **dadurch gekennzeichnet, dass** das optische Positionsanzeigemittel Bestandteil des Führungselements (32) ist.

4. Lichtbogenschweißbrennereinrichtung nach einem der vorhergehenden Ansprüche, **dadurch gekennzeichnet, dass** das Führungselement (32) mit einem seiner Enden durch ein äußeres, endseitiges Gehäuseteil der Lichtbogenschweißbrennereinrichtung, insbesondere durch eine Endkappe (14), hindurchgeführt ist und hierbei aus dem äußeren Gehäuseteil der Lichtbogenschweißbrennereinrichtung aus dessen Gehäuse nach außen hinausragt.

5. Lichtbogenschweißbrennereinrichtung nach einem der vorhergehenden Ansprüche, **dadurch gekennzeichnet, dass** das Führungselement (32) als Hülse mit - in Bezug auf seine Längserstreckung entlang seiner Längsachse - unterschiedlichen Außendurchmessern ausgebildet ist.

6. Lichtbogenschweißbrennereinrichtung nach Anspruch 5, **dadurch gekennzeichnet, dass** das Führungselement (32) für die Drahtseele zwei Abschnitte der äußeren Mantelfläche mit jeweils einem konstanten Durchmesser aufweist, zwischen denen ein Abschnitt mit einem konischen Verlauf der Mantelfläche angeordnet ist.

7. Lichtbogenschweißbrennereinrichtung nach einem der vorhergehenden Ansprüche, **dadurch gekennzeichnet, dass** das Führungselement (32) mit seinem Ende lediglich durch das äußere Gehäuseteil, insbesondere durch die Endkappe (14), hindurchgeführt und verbindungslos am äußeren Gehäuseteil angeordnet ist.

8. Lichtbogenschweißbrennereinrichtung nach einem der vorhergehenden Ansprüche, **dadurch gekennzeichnet, dass** das Führungselement (32) für die Drahtseele (8a) mit seinem größeren Außendurchmesser in einem hülsenförmigen Einlaufkörper und mit letzterem verbindungslos angeordnet ist.

9. Lichtbogenschweißbrennereinrichtung nach einem der vorhergehenden Ansprüche, **dadurch gekennzeichnet, dass** der hülsenförmige Einlaufkörper mit seiner äußeren Mantelfläche am Gehäuse (13) der Lichtbogenschweißbrennereinrichtung, insbesondere an der Endkappe (14), lösbar befestigt ist.

10. Lichtbogenschweißbrennereinrichtung nach einem der vorhergehenden Ansprüche, **dadurch gekennzeichnet, dass** die Endkappe (14) lösbar am Mantelrohr (2) der Lichtbogenschweißbrennereinrichtung angeordnet ist.

11. Lichtbogenschweißbrennereinrichtung nach einem der vorhergehenden Ansprüche, **dadurch gekennzeichnet, dass** zwischen der Endkappe (14) I und dem Führungselement (32) für die Drahtseele (8a) ein Dichtungselement angeordnet ist.

12. Lichtbogenschweißbrennereinrichtung nach einem der vorhergehenden Ansprüche, **dadurch gekennzeichnet, dass** zwischen dem hülsenförmigen Einlaufkörper und dem Gehäuse (13) der Lichtbogenschweißbrennereinrichtung eine zweite Dichtung angeordnet ist.

13. Austauschbare Baugruppe für eine Lichtbogenschweißbrennereinrichtung nach einem der vorhergehenden Ansprüche 1 bis 12, sowie eine gehäuseseitige Endkappe (14) dieser Lichtbogenschweißbrennereinrichtung, wobei die austauschbare Baugruppe eine zur Anordnung im Inneren der Lichtbogenschweißbrennereinrichtung vorgesehene Drahtseele (8a) sowie ein im Bereich eines Endes der Drahtseele (8a) angeordnetes und letzteres umgebendes Führungselement (32) aufweist, **gekennzeichnet, durch** ein Bauteil, an welchem das Führungselement (32) ausgebildet ist und einen Abschnitt mit einem kleineren äußeren Durchmesser, vorzugsweise einem konstantem kleineren Durchmesser, einem sich daran anschliessenden Abschnitt mit einem konischen äußeren Abschnitt, sowie einem sich an den konischen Abschnitt anschließenden Abschnitt mit einem größeren äußeren Durchmesser aufweist, wobei für das Führungselement (32) hinsichtlich seiner Einführrichtung in die Lichtbogenschweißbrennereinrichtung eine vorbestimmte Endposition in der Lichtbogenschweißbrennereinrichtung vorgesehen ist, und bei Erreichen der Endposition durch das Führungselement (32) ein Positionssignalisationsmittel der Baugruppe außerhalb der Lichtbogenschweißbrennereinrichtung wahrnehmbar ist.

14. Austauschbare Baugruppe nach Anspruch 13, **dadurch gekennzeichnet, dass** das Bauteil mit dem Führungselement (32) mit einem Endabschnitt seiner Außenfläche versehen ist, welche derart auf die Durchgangsbohrung (16) der Endkappe (14) abgestimmt ist, dass in der Gebrauchslage des Führungselements (32) sein Endabschnitt aus der Durchgangsbohrung (16) der Endkappe (14) heraussteht.

15. Austauschbare Baugruppe nach Anspruch 14, **dadurch gekennzeichnet, dass** das Führungselement (32) in seiner Gebrauchslage gegen eine Innenfläche der Endkappe (14) oder gegen eine Innenfläche eines anderen Bauteils des Gehäuses (13) der Lichtbogenschweißbrennereinrichtung anliegt, wodurch eine Einschubbewegung der austauschbaren Baugruppe begrenzt ist, und hierbei der Endabschnitt des Führungselements (32) aus der Endkappe (14) und damit aus dem Lichtbogenschweißbrenner (1) herausragt.

16. Lichtbogenschweißbrennereinrichtung nach einem der vorhergehenden Ansprüche 1 bis 12, **gekennzeichnet durch** ein aus dem Gehäuse (13) der Lichtbogenschweißbrennereinrichtung herausragendes und zwischen einer äußeren Endkappe (14) der Lichtbogenschweißbrennereinrichtung und einem Drahtvorschubmittel angeordnetes Knickschutzmittel für den Schweißdraht (7), in welchem der Schweißdraht (7) geführt ist.

17. Lichtbogenschweißbrenner nach Anspruch 16, **dadurch gekennzeichnet, dass** das Knickschutzmittel in der Lichtbogenschweißbrennereinrichtung lösbar angeordnet ist und ein Abschnitt des Knickschutzmittels aus einer Ausnehmung der Endkappe (14) der Lichtbogenschweißbrennereinrichtung hinausragt.

18. Lichtbogenschweißbrennereinrichtung nach Anspruch 16 oder 17, **dadurch gekennzeichnet, dass** das Knickschutzmittel hülsenförmig, sowie mit einer durchgehenden Ausnehmung zur Aufnahme des Schweißdrahts (7) ausgebildet ist, und vorzugsweise im drahtvorschubseitigen Ende eine Begrenzungswand der durchgehenden Ausnehmung mit einer Fase versehen ist.

19. Lichtbogenschweißbrennereinrichtung nach zumindest einem der Ansprüche 16 bis 18, **dadurch gekennzeichnet, dass** das Knickschutzmittel einstückig mit einer innerhalb der Lichtbogenschweißbrennereinrichtung angeordneten Aufnahme für eine Drahtseele (8a) ausgebildet ist.

20. Lichtbogenschweißbrennereinrichtung nach zumindest einem der vorhergehenden Ansprüche 16 bis 19, **dadurch gekennzeichnet, dass** das Knickschutzmittel verbindungslos an der Lichtbogenschweißbrennereinrichtung angeordnet ist.

21. Lichtbogenschweißbrennereinrichtung nach zumindest einem der vorhergehenden Ansprüche 16 bis 20, **dadurch gekennzeichnet, dass** das Knickschutzmittel aufgrund einer formschlüssigen Anordnung des Knickschutzmittels in axialer Richtung in der Lichtbogenschweißbrennereinrichtung, in einer vorbestimmten Position in der Lichtbogenschweißbrennereinrichtung angeordnet ist.

22. Lichtbogenschweißbrennereinrichtung nach zumindest einem der vorhergehenden Ansprüche 1 bis 12 und 16 bis 21, **dadurch gekennzeichnet, daß** im Bereich eines drahtvorschubseitigem Ende der Lichtbogenschweißbrennereinrichtung einzig das einstückig ausgebildete Führungselement (32) in Kontakt mit der Drahtseele (8a) steht.

23. Lichtbogenschweißbrennereinrichtung nach einem der vorhergehenden Ansprüche, **dadurch gekennzeichnet, daß** das Führungselement (32), zumindest ein Kontaktbereich des Führungselements (32) mit der Drahtseele (8a), vorzugsweise das gesamte einstückige Führungselement (32), einen elektrisch nicht-leitenden Werkstoff aufweist.

24. Lichtbogenschweißbrennereinrichtung nach einem der vorhergehenden Ansprüche, **gekennzeichnet durch** mehrere wechselweise und im Austausch zueinander in die Lichtbogenschweißbrennereinrichtung einsetzbare Führungselemente (32), welche unterschiedliche Werkstoffe, insbesondere keramische oder Kunststoffwerkstoffe aufweisen.

25. Lichtbogenschweißbrennereinrichtung nach zumindest einem der vorhergehenden Ansprüche, die zur Anordnung an einem Schweißroboter (101) vorgesehen ist, der einen Roboterarm (103) aufweist, an dem eine relativ zum Roboterarm (103) drehbare Anschlußeinrichtung vorgesehen ist, umfassend
eine Befestigungseinrichtung (109) zur Anbringung der Schweißbrennervorrichtung am Schweißroboter (101),
eine Aufnahmeeinrichtung (110) zur Halterung eines Schweißbrenners (107) und zur Übertragung von angetriebenen rotatorischen Bewegungen auf den Schweißbrenner (107),
einen elektrischen Anschluß für ein Schweißstromkabel (118a), mittels dem eine Roboterseite der Schweißbrennervorrichtung mit einer Schweißstromquelle elektrisch verbindbar ist,
eine Stromübertragungseinrichtung, über die das Schweißstromkabel (118a) mit einer Schweißbrennerseite der Schweißbrennervorrichtung elektrisch verbindbar ist, wobei die Stromübertragungseinrichtung einen Stator aufweist, der gegenüber dem Roboterarm (103) zur drehfesten Anordnung vorgesehen ist, in Bezug auf die schweißroboterseitige Anschlußeinrichtung jedoch relativ drehbar ist,
eine Durchführung des Stators, durch die zumindest einer der für den Schweißvorgang benötigten Verbrauchsstoffe in Richtung zur Aufnahmeeinrichtung durchführbar ist,
die Aufnahmeeinrichtung (110) und die Befestigungseinrichtung (109) als Rotor ausgebildet sind, die hierdurch relativ gegenüber dem Stator rotierbar sind, und die Aufnahmeeinrichtung (110) und/oder die Befestigungseinrichtung (109) mittels einer elektrischen Kontakteinrichtung mit dem Stator elektrisch leitend verbindbar sind, wobei
die Befestigungseinrichtung (109) des Rotors zur Anbringung an der Anschlußeinrichtung des Roboters (101) ausgebildet ist, und durch die Anbringung an der Anschlußeinrichtung des Roboters (101) eine Drehachse des Rotors mit der Drehachse der Anschlußeinrichtung des Roboters zumindest im wesentlichen fluchtet und der Rotor um die Drehachse sowie um den Stator drehbar ist.

26. Lichtbogenschweißbrennereinrichtung nach Anspruch 25, **gekennzeichnet durch** eine entlang der Drehachse des Rotors verlaufenden Ausnehmung, welche bezüglich der Drehachse zentrisch sowohl durch die Befestigungseinrichtung (109) als auch durch die Aufnahmeeinrichtung (110) verläuft, wobei sowohl eine Eingangsöffnung der Ausnehmung im Stator als auch eine Ausgangsöffnung der Ausnehmung im Rotor bezüglich der Drehachse ebenfalls zentrisch angeordnet sind.

## Claims

1. Arc welding torch device, having a consumable electrode, the electrode being provided with a direction of movement from a rear end (6) of the arc welding torch device for feeding in the direction of a front end (5) of the arc welding torch device, in the region of which the electrode is consumed during an arc welding process, the electrode in the arc welding torch device is guided in an exchangeable wire core (8a), the wire core (8a) being arranged at least in the region of the rear end (6) of the arc welding torch device in a guide element (32) which surrounds the wire core (8a) and is designed as an exchangeable wear part, the guide element (32) of the wire core being provided for joint wear-related replacement of the wire core,
**characterized in that**
a predetermined end position is provided in the arc welding torch device for the guide element (32) with regard to its direction of insertion into the arc welding torch device, and when the guide element (32) reaches the end position, a position signaling means can be perceived outside of the arc welding torch device.

2. Arc welding torch device according to claim 1, **characterized in that**, when the end position is reached by the guide element (32), a position indicating means arranged outside the arc welding torch device can be visually perceived.

3. Arc welding torch device according to claim 1 or 2, **characterized in that** the visual position indicating means is part of the guide element (32).

4. Arc welding torch device according to any of the preceding claims, **characterized in that** the guide element (32) is guided with one of its ends through an outer, end-side housing part of the arc welding torch device, in particular through an end cap (14), and protrudes outward from its housing from the outer housing part of the arc welding torch device.

5. Arc welding torch device according to any of the preceding claims, **characterized in that** the guide element (32) is designed as a sleeve with-in relation to its longitudinal extent along its longitudinal axis-different outer diameters.

6. Arc welding torch device according to claim 5, **characterized in that** the guide element (32) for the wire core has two sections of the outer jacket surface, each with a constant diameter, between which a section with a conical shape of the jacket surface is arranged.

7. Arc welding torch device according to any of the preceding claims, **characterized in that** the end of the guide element (32) is only passed through the outer housing part, in particular through the end cap (14), and is arranged on the outer housing part without connection.

8. Arc welding torch device according to any of the preceding claims, **characterized in that** the guide element (32) for the wire core (8a) is arranged with its larger outer diameter in a sleeve-shaped inlet body and without connection to the latter.

9. Arc welding torch device according to any of the preceding claims, characterized int that the sleeve-shaped inlet body is detachably fastened with its outer jacket surface to the housing (13) of the arc welding torch device, in particular to the end cap (14).

10. Arc welding torch device according to any of the preceding claims, **characterized in that** the end cap (14) is detachably arranged on the jacket tube (2) of the arc welding torch device.

11. Arc welding torch device according to any of the preceding claims, **characterized in that** a sealing element is arranged between the end cap (14) and the guide element (32) for the wire core (8a).

12. Arc welding torch device according to any of the preceding claims, characterized int that a second seal is arranged between the sleeve-shaped inlet body and the housing (13) of the arc welding torch device.

13. Exchangeable assembly for an arc welding torch device according to any of the preceding claims 1 to 12, as well as a housing-side end cap (14) of this arc welding torch device, the exchangeable assembly having a wire core (8a) provided for arrangement inside the arc welding torch device and a guide element (32) arranged in the region of one end of the wire core (8a) and surrounding the latter, **characterized by** a component on which the guide element (32) is formed and by a section with a smaller outer diameter, preferably a constant smaller diameter, an adjoining section with a conical outer section, and a section adjoining the conical section with a larger outer diameter, wherein a predetermined end position is provided in the arc welding torch device for the guide element (32) with regard to its direction of insertion into the arc welding torch device, and when the guide element (32) reaches the end position, a position signaling means can be perceived outside of the arc welding torch device.

14. Exchangeable assembly according to claim 13, **characterized in that** the component with the guide element (32) is provided with an end portion of its outer surface which is matched to the through hole (16) of the end cap (14) in such a way that in the position of use of the guide element (32) its end portion protrudes from the through hole (16) of the end cap (14).

15. Exchangeable assembly according to claim 14, **characterized in that** the guide element (32) rests in its position of use against an inner surface of the end cap (14) or against an inner surface of another component of the housing (13) of the arc welding torch device, whereby an insertion movement of the exchangeable assembly is limited, and here the end portion of the guide element (32) protrudes from the end cap (14) and thus from the arc welding torch (1).

16. Arc welding torch device according to any of the preceding claims 1 to 12, **characterized by** a kink protection means for the welding wire (7) protruding from the housing (13) of the arc welding torch device and arranged between the outer end cap (14) of the arc welding torch device and a wire feeding means, in which kink protection means the welding wire (7) is guided.

17. Arc welding torch device according to claim 16, **characterized in that** the kink protection means is detachably arranged in the arc welding torch device and a section of the kink protection means protrudes from a recess in the end cap (14) of the arc welding torch device.

18. Arc welding torch device according to claim 16 or 17, **characterized in that** the kink protection means is sleeve-shaped and has a continuous recess for receiving the welding wire (7), and preferably in the wire-feed-side end a boundary wall of the continuous recess is provided with a bevel.

19. Arc welding torch device according to any one of claims 16 to 18, **characterized in that** the kink protection means is formed in one piece with a receptacle for a wire core (8a) arranged within the arc welding torch device.

20. Arc welding torch device according to any one of claims 16 to 19, **characterized in that** the kink protection means is arranged without connection on the arc welding torch device.

21. Arc welding torch device according to at least one of the preceding claims 16 to 20, **characterized in that** the kink protection means is arranged in a predetermined position in the arc welding torch device due to a positive-fitting arrangement of the kink protection means in the axial direction in the arc welding torch device.

22. Arc welding torch device according to at least one of the preceding claims 1 to 12 and 16 to 21, **characterized in that** in the region of a wire-feed-side end of the arc welding torch device only the guide element (32) designed in one piece is in contact with the wire core (8a).

23. Arc welding torch device according to any one of the preceding claims, **characterized in that** the guide element (32), at least one contact area of the guide element (32) with the wire core (8a), preferably the entire one-piece guide element (32), has an electrically non-conductive material.

24. Arc welding torch device according to any one of the preceding claims, **characterized by** several guide elements (32) which can be inserted into the arc welding torch device alternately and in exchange for one another and which have different materials, in particular ceramic or plastic materials.

25. Arc welding torch device according to at least one of the preceding claims, which is provided for arrangement on a welding robot (101) which has a robot arm (103) on which a connection device is provided which is rotatable relative to the robot arm (103), comprising
a fastening device (109) for attaching the welding torch device to the welding robot (101),
a receiving device (110) for holding a welding torch (107) and for transmitting driven rotary movements to the welding torch (107),
an electrical connection for a welding current cable (118a), by means of which a robot side of the welding torch device can be electrically connected to a welding current source,
a current transmission device via which the welding current cable (118a) can be electrically connected to a welding torch side of the welding torch device, the current transmission device having a stator which is provided for a non-rotatable arrangement with respect to the robot arm (103), but which is relatively rotatable with respect to the connection device on the welding robot side,
a passage of the stator through which at least one of the consumables required for the welding process can be passed in the direction of the receiving device,
the receiving device (110) and the fastening device (109) are designed as a rotor, which can thereby be rotated relative to the stator, and the receiving device (110) and/or the fastening device (109) can be connected to the stator in an electrically conductive manner by means of an electrical contact device, wherein
the fastening device (109) of the rotor is designed to be attached to the connection device of the robot (101), and due to the attachment to the connection device of the robot (101), an axis of rotation of the rotor is at least substantially aligned with the axis of rotation of the connection device of the robot and the rotor is rotatable about the axis of rotation and about the stator.

26. Arc welding torch device according to claim 25, **characterized by** a recess running along the axis of rotation of the rotor, which runs centrally with respect to the axis of rotation both through the fastening device (109) and through the receiving device (110), wherein both an inlet opening of the recess in the stator and an outlet opening of the recess in the rotor are being arranged centrally with respect to the axis of rotation.

## Revendications

1. Dispositif de chalumeau de soudage à l'arc comportant une électrode fusible, l'électrode étant prévue pour avancer dans une direction de déplacement allant d'une extrémité arrière (6) du dispositif de chalumeau de soudage à l'arc à une extrémité avant (5) du dispositif de chalumeau de soudage à l'arc, zone dans laquelle l'électrode fond pendant un processus de soudage à l'arc, l'électrode étant guidée dans le dispositif de chalumeau de soudage à l'arc à l'intérieur d'une gaine de fil (8a) remplaçable, la gaine de fil (8a) étant elle-même disposée, au moins dans la zone de l'extrémité arrière (6) du dispositif de chalumeau de soudage à l'arc, dans un élément de guidage (32) entourant la gaine de fil (8a) et réalisé sous la forme d'une pièce d'usure remplaçable, l'élément de guidage (32) de la gaine de fil étant prévu pour le remplacement conjoint de la gaine de fil en raison de l'usure,
**caractérisé en ce que**
une position finale prédéterminée est prévue pour l'élément de guidage (32) dans le dispositif de chalumeau de soudage à l'arc par rapport à sa direction d'insertion dans le dispositif de chalumeau de soudage à l'arc, et qu'un moyen de signalisation de position est perceptible à l'extérieur du dispositif de chalumeau de soudage à l'arc lorsque l'élément de guidage (32) atteint cette position finale.

2. Dispositif de chalumeau de soudage à l'arc selon la revendication 1, **caractérisé en ce que**, lorsque l'élément de guidage (32) atteint la position finale, un moyen d'indication de position disposé à l'extérieur du dispositif de chalumeau de soudage à l'arc est perceptible optiquement.

3. Dispositif de chalumeau de soudage à l'arc selon la revendication 1 ou 2, **caractérisé en ce que** le moyen d'indication de position optique fait partie intégrante de l'élément de guidage (32).

4. Dispositif de chalumeau de soudage à l'arc selon l'une quelconque des revendications précédentes, **caractérisé en ce que** l'élément de guidage (32) est passé, par l'une de ses extrémités, à travers une partie de boîtier terminale extérieure du dispositif de chalumeau de soudage à l'arc, en particulier à travers un capuchon d'extrémité (14), et fait ainsi saillie vers l'extérieur depuis la partie de boîtier extérieure du dispositif de chalumeau de soudage à l'arc.

5. Dispositif de chalumeau de soudage à l'arc selon l'une quelconque des revendications précédentes, **caractérisé en ce que** l'élément de guidage (32) est réalisé sous la forme d'un manchon présentant - par rapport à son extension longitudinale le long de son axe longitudinal - différents diamètres extérieurs.

6. Dispositif de chalumeau de soudage à l'arc selon la revendication 5, **caractérisé en ce que** l'élément de guidage (32) pour la gaine de fil présente deux sections de la surface périphérique extérieure ayant chacune un diamètre constant, entre lesquelles est disposée une section ayant une surface périphérique conique.

7. Dispositif de chalumeau de soudage à l'arc selon l'une quelconque des revendications précédentes, **caractérisé en ce que** l'élément de guidage (32) est passé, par son extrémité, uniquement à travers la partie de boîtier extérieure, en particulier à travers le capuchon d'extrémité (14), et est disposé sans liaison sur la partie de boîtier extérieure.

8. Dispositif de chalumeau de soudage à l'arc selon l'une quelconque des revendications précédentes, **caractérisé en ce que** l'élément de guidage (32) pour la gaine de fil (8a) est disposé, avec son plus grand diamètre extérieur, dans un corps d'entrée en forme de manchon, sans liaison avec ce dernier.

9. Dispositif de chalumeau de soudage à l'arc selon l'une quelconque des revendications précédentes, **caractérisé en ce que** le corps d'entrée en forme de manchon est fixé de manière amovible par sa surface périphérique extérieure au boîtier (13) du dispositif de chalumeau de soudage à l'arc, en particulier au capuchon d'extrémité (14).

10. Dispositif de chalumeau de soudage à l'arc selon l'une quelconque des revendications précédentes, **caractérisé en ce que** le capuchon d'extrémité (14) est disposé de manière amovible sur le tube enveloppe (2) du dispositif de chalumeau de soudage à l'arc.

11. Dispositif de chalumeau de soudage à l'arc selon l'une quelconque des revendications précédentes, **caractérisé en ce qu'**un élément d'étanchéité est disposé entre le capuchon d'extrémité (14) et l'élément de guidage (32) pour la gaine de fil (8a).

12. Dispositif de chalumeau de soudage à l'arc selon l'une quelconque des revendications précédentes, **caractérisé en ce qu'**un deuxième joint d'étanchéité est disposé entre le corps d'entrée en forme de manchon et le boîtier (13) du dispositif de chalumeau de soudage à l'arc.

13. Ensemble remplaçable pour un dispositif de chalumeau de soudage à l'arc selon l'une quelconque des revendications 1 à 12 précédentes, ainsi qu'un capuchon d'extrémité (14) côté boîtier de ce dispositif de chalumeau de soudage à l'arc, l'ensemble remplaçable comprenant une gaine de fil (8a) prévue pour être disposée à l'intérieur du dispositif de chalumeau de soudage à l'arc ainsi qu'un élément de guidage (32) disposé au niveau d'une extrémité de la gaine de fil (8a) et entourant cette dernière, **caractérisé par** un composant sur lequel est formé l'élément de guidage (32) et qui présente une section d'un diamètre extérieur plus petit, de préférence un diamètre constant plus petit, une section adjacente ayant une section extérieure conique ainsi qu'une section adjacente à la partie conique ayant un diamètre extérieur plus grand, une position finale prédéterminée dans le dispositif de chalumeau de soudage à l'arc étant prévue pour l'élément de guidage (32) par rapport à sa direction d'insertion dans le dispositif de chalumeau de soudage à l'arc, et lorsque l'élément de guidage (32) atteint cette position finale, un moyen de signalisation de position de l'ensemble étant perceptible depuis l'extérieur du dispositif de chalumeau de soudage à l'arc.

14. Ensemble remplaçable selon la revendication 13, **caractérisé en ce que** le composant comportant l'élément de guidage (32) est pourvu d'une section d'extrémité de sa surface extérieure qui est adaptée au trou traversant (16) du capuchon d'extrémité (14) de telle sorte que, dans la position d'utilisation de l'élément de guidage (32), sa section d'extrémité dépasse du trou traversant (16) du capuchon d'extrémité (14).

15. Ensemble remplaçable selon la revendication 14, **caractérisé en ce que** l'élément de guidage (32), dans sa position d'utilisation, s'appuie contre une surface intérieure du capuchon d'extrémité (14) ou contre une surface intérieure d'un autre composant du boîtier (13) du dispositif de chalumeau de soudage à l'arc, ce qui limite un mouvement d'insertion de l'ensemble remplaçable, et de ce fait la section d'extrémité de l'élément de guidage (32) fait saillie hors du capuchon d'extrémité (14) et donc du chalumeau de soudage à l'arc (1).

16. Dispositif de chalumeau de soudage à l'arc selon l'une quelconque des revendications 1 à 12 précédentes, **caractérisé par** un moyen de protection contre le pliage pour le fil de soudage (7), faisant saillie hors du boîtier (13) du dispositif de chalumeau de soudage à l'arc et disposé entre un capuchon d'extrémité extérieur (14) du dispositif de chalumeau de soudage à l'arc et un moyen d'avancement du fil, dans lequel le fil de soudage (7) est guidé.

17. Chalumeau de soudage à l'arc selon la revendication 16, **caractérisée en ce que** le moyen de protection contre le pliage est disposé de manière amovible dans le chalumeau de soudage à l'arc et qu'une section du moyen de protection contre le pliage fait saillie hors d'un évidement du capuchon d'extrémité (14) du dispositif de chalumeau de soudage à l'arc.

18. Dispositif de chalumeau de soudage à l'arc selon la revendication 16 ou 17, **caractérisé en ce que** le moyen de protection contre le pliage est réalisé en forme de manchon et avec un évidement continu destiné à recevoir le fil de soudage (7), et **en ce que**, de préférence, à l'extrémité côté avancement de fil, une paroi de délimitation de l'évidement continu est pourvue d'un chanfrein.

19. Dispositif de chalumeau de soudage à l'arc selon au moins l'une des revendications 16 à 18, **caractérisé en ce que** le moyen de protection contre le pliage est réalisé d'une seule pièce avec un logement pour une gaine de fil (8a) disposé à l'intérieur du dispositif de chalumeau de soudage à l'arc.

20. Dispositif de chalumeau de soudage à l'arc selon au moins l'une des revendications précédentes 16 à 19, **caractérisé en ce que** le moyen de protection contre le pliage est disposé sans liaison sur le dispositif de chalumeau de soudage à l'arc.

21. Dispositif de chalumeau de soudage à l'arc selon au moins l'une des revendications précédentes 16 à 20, **caractérisé en ce que** le moyen de protection contre le pliage est disposé dans une position prédéterminée dans le dispositif de chalumeau de soudage à l'arc, en raison d'une disposition par complémentarité de forme du moyen de protection contre le pliage dans la direction axiale du dispositif de chalumeau de soudage à l'arc.

22. Dispositif de chalumeau de soudage à l'arc selon au moins l'une des revendications précédentes 1 à 12 et 16 à 21, **caractérisé en ce que**, au niveau d'une extrémité côté avancement du fil du dispositif de chalumeau de soudage à l'arc, seul l'élément de guidage (32) réalisé d'une seule pièce est en contact avec la gaine de fil (8a).

23. Dispositif de chalumeau de soudage à l'arc selon l'une quelconque des revendications précédentes, **caractérisé en ce que** l'élément de guidage (32), au moins une zone de contact de l'élément de guidage (32) avec la gaine de fil (8a), de préférence l'ensemble de l'élément de guidage (32) formé d'une seule pièce, est constitué d'un matériau électriquement non conducteur.

24. Dispositif de chalumeau de soudage à l'arc selon l'une quelconque des revendications précédentes, **caractérisé par** plusieurs éléments de guidage (32) pouvant être insérés alternativement et de manière interchangeable dans le dispositif de chalumeau de soudage à l'arc, lesquels sont constitués de matériaux différents, en particulier de matériaux céramiques ou plastiques.

25. Dispositif de chalumeau de soudage à l'arc selon au moins l'une quelconque des revendications précédentes, destiné à être monté sur un robot de soudage (101) comprenant un bras de robot (103) sur lequel est prévu un dispositif de raccordement pouvant tourner par rapport au bras de robot (103), comportant
un dispositif de fixation (109) destiné à fixer le dispositif de chalumeau de soudage sur le robot de soudage (101),
un dispositif de réception (110) destiné à maintenir un chalumeau de soudage (107) et à transmettre des mouvements de rotation entraînés au chalumeau de soudage (107),
un raccordement électrique pour un câble de courant de soudage (118a), au moyen duquel un côté robot du dispositif de chalumeau de soudage peut être relié électriquement à une source de courant de soudage,
un dispositif de transmission de courant, par l'intermédiaire duquel le câble de courant de soudage (118a) peut être relié électriquement à un côté chalumeau de soudage du dispositif de chalumeau de soudage, le dispositif de transmission de courant comprenant un stator qui est prévu pour être monté de manière solidaire en rotation par rapport au bras de robot (103), mais qui peut tourner par rapport au dispositif de raccordement côté robot de soudage,
un passage du stator, à travers lequel au moins l'un des consommables nécessaires au processus de soudage peut être passé en direction du dispositif de réception,
le dispositif de réception (110) et le dispositif de fixation (109) étant réalisés sous la forme d'un rotor, ce qui leur permet de tourner par rapport au stator, et le dispositif de réception (110) et/ou le dispositif de fixation (109) pouvant être reliés de manière électriquement conductrice au stator au moyen d'un dispositif de contact électrique,
le dispositif de fixation (109) du rotor étant conçu pour être monté sur le dispositif de raccordement du robot (101), et grâce à ce montage sur le dispositif de raccordement du robot (101), un axe de rotation du rotor est au moins sensiblement aligné avec l'axe de rotation du dispositif de raccordement du robot, et le rotor peut tourner autour de cet axe de rotation ainsi qu'autour du stator.

26. Dispositif de chalumeau de soudage à l'arc selon la revendication 25, **caractérisé par** un évidement s'étendant le long de l'axe de rotation du rotor, qui s'étend de manière centrée, par rapport à l'axe de rotation, à la fois à travers le dispositif de fixation (109) et à travers le dispositif de réception (110), une ouverture d'entrée de l'évidement dans le stator ainsi qu'une ouverture de sortie de l'évidement dans le rotor étant également disposées de manière centrée par rapport à l'axe de rotation.
